# EUROPEAN PATENT APPLICATION

(11) **EP 1 638 268 A1**
(43) Date of publication of application: **22.03.2006**
(21) Application number: 04736345.2
(22) Date of filing: 08.06.2004
(51) Int. Cl.: H04L 12/56, H04M 11/00

(54) **NETWORK MANAGEMENT DEVICE, MOBILE TERMINAL, COMMUNICATION METHOD USING SAME**

(30) Priority: 25.06.2003 JP 2003181452
(71) Applicant: MATSUSHITA ELECTRIC INDUSTRIAL CO., LTD., Kadoma-shi, Osaka 571-8501 (JP)
(72) Inventor: AMISHIMA, Maki, Kamakura-Shi, Kanagawa 247-0065 (JP); TAKESHITA, Sachiko, Tokyo 166-0016 (JP); TAKEI, Kentaro, Tokyo 144-0052 (JP); NAKANO, Go, Tokyo 151-0073 (JP)
(74) Representative: Grünecker, Kinkeldey, Stockmair & Schwanhäusser Anwaltssozietät
(86) International application number: PCT/JP2004/008278
(87) International publication number: WO 2005/002152

(57) **Abstract**

A network server 110 for managing a terminal connected to a local IP network 111 comprises: a signaling control section 109 for receiving a registration request, sent from a mobile device 120 which has just been connected to the local IP network 111, requesting registration as a terminal connected to the network; an equipment information management section 107 for obtaining, as equipment information, information about pieces of equipment 112 to 117 connected to the local IP network 111; and a signaling control section 109 for sending to the mobile device 120 a response to the registration request, the response including equipment information obtained by the equipment information management section 107. A network server capable of using equipment in a network with ease can thus be provided.

## Description

### Technical Field

The present invention relates to a network management device for managing a terminal connected to a network, a mobile device to be connected to the network, a network system, and a communication method using these items.

### Background Art

PDAs, notebook PCs, or other mobile devices are carried and used on business trips or the like because of their superior portability, but with these devices with limited ability it has been difficult to use various kinds of multimedia communication. In order to get rid of such inconvenience, an art has been known through Japanese Patent Laid-Open Application No. 2002-152830 etc., the art being for, on a network at a visiting place or the like to which a mobile device is connected, connecting the mobile device with equipment in the network to carry out multimedia communication using the connected equipment.

An invention according to Japanese Patent Laid-Open Application No. 2002-152830 has a configuration in which a multimedia communication device for carrying out multimedia communication and a network server are connected to each other, and a mobile device negotiates with the server to dynamically occupy and release the multimedia communication device when using it. When the mobile device is allowed to use the multimedia communication device by this negotiation, it dynamically occupies the multimedia communication device to carry out multimedia communication using the multimedia communication device.

### Disclosure of Invention

The mobile device and server for multimedia communication according to above-mentioned Japanese Patent Laid-Open Application No. 2002-152830 have the following problems. First, each time a mobile device uses equipment in a foreign network, it has to negotiate with a server for using equipment, and this negotiation must be conducted separately from a negotiation for starting multimedia communication using the equipment. Moreover, sequences for using equipment, such as choice of available equipment and circuit setting, are complex, which has caused a connection delay. Furthermore, although equipment can be used for multimedia communication requested by a mobile device, equipment cannot be used for multimedia communication for which a mobile device is requested by another terminal.

There have been UPnP and other technologies as an art for allowing newly connected equipment in a network to operate in a coordinated fashion. However, since these protocols are different from a communication protocol with which a mobile device communicates over an IP network, equipment cannot be used for communication unless many sequences, such as a service search and request, are passed through. Moreover, since a mobile device is required to have protocol stacks corresponding to each of a plurality of protocols, significant space in its memory is taken up.

A purpose of the present invention made in consideration of the above-mentioned subjects is to provide a network management device which facilitates use of equipment in a network, a mobile device to be connected to the network, a network system, and a communication method using these items.

The network management device according to the invention is a network management device for managing a terminal connected to a network, and the network management device comprises: a registration request receiving means for receiving a registration request, sent from a mobile device which has just been connected to the network, requesting registration as a terminal connected to the network; an obtaining means for obtaining, as equipment information, information about equipment connected to the network; and a registration response sending means for sending to the mobile device a response to the registration request, the response including equipment information obtained by the obtaining means.

In this configuration, since the network management device sends equipment information in response to a registration request sent from the mobile device, the mobile device can obtain information about available equipment in the first step of registration to a network. Additionally, since equipment information is included in the registration response to the registration request, the mobile device can obtain equipment information by a simple sequence comprising a registration request and its response. Incidentally, equipment information may be managed by the network management device itself, or may be managed by a device other than the network management device. In the case that equipment information is managed by another device, the obtaining means of the network management device can obtain equipment information by sending a request for equipment information to the other device and receiving equipment information sent in response to the request. In addition, the network management device may store information about equipment available to each user. By storing information about available equipment, authority of a mobile device user can be checked easily when the mobile device communicates with equipment. Moreover, the network management device preferably manages information about current state of a terminal connected to the network.

In the above network management device, the obtaining means, based on user attribute information included in a received registration request, may obtain equipment information on equipment available to that user. In order to compare with the above user attribute information, equipment information may include attribute information on a user who is allowed to use that equipment.

In this configuration in which the obtaining means, based on user attribute information, obtains equipment information on equipment available to that user, available equipment can be changed based on a user attribute of each mobile device.

The above network management device may further comprises: an identifier sending means for sending a user identifier included in a received registration request to a user attribute information management device which manages attribute information on that user; and an attribute information receiving means for receiving attribute information on a user related to the identifier sent from the user attribute information management device; wherein the obtaining means, based on user attribute information received by the attribute information receiving means, obtains equipment information on equipment available to that user.

In this way, user attribute information on the mobile device which sent a registration request can be obtained by sending an identifier included in the registration request to a user attribute information management device and receiving user attribute information sent in response to that. Additionally, in the configuration in which the obtaining means, based on user attribute information, obtains equipment information on equipment available to that user, available equipment can be changed based on a user attribute of each mobile device. The user identifier may be sent with a password by the identifier sending means so that the user attribute information management device authenticates the user. If such a configuration is adopted, network security can be enhanced. The user attribute information management device may be a network server of the mobile device's home (base). The user attribute information management device may also be connected to a network managed by the network management device. In addition, in order to compare with the above user attribute information, equipment information may include attribute information on a user who is allowed to use that equipment.

In the above network management device, a protocol used for receiving from and sending to the mobile device a registration request and a registration response may be the same as a protocol for communicating with the equipment.

In this way, an amount of memory can be saved by using a common protocol because the network management device is not required to have a function to process a plurality of protocols.

In the above network management device, the network may be an IP network and SIP may be used as the protocol.

SIP is desirable because it is a simple protocol and because equipment information, transmission data, or other additional information can be included in a message body.

The mobile device according to the invention comprises: a registration request sending means for sending to a network management device which manages a terminal connected to a network a registration request requesting registration as a terminal connected to the network; a registration response receiving means for receiving a response to the registration request, the response sent from the network management device, the response including equipment information on available equipment; and a storage means for storing equipment information on available equipment included in the registration response.

In this configuration in which equipment information included in a registration response is stored in a storage means, the mobile device, based on equipment information on available equipment stored in the storage means, can grasp information on equipment available to a user.

In the above mobile device, the registration request sending means may send the registration request including user attribute information.

In this configuration, by sending a registration request including user attribute information to, for example, the network management device according to claim 2, the network management device is allowed to, based on the user attribute information, obtain equipment information on equipment available to that user, and therefore available equipment can be changed based on the user attribute. In addition, user attribute information may be stored in the mobile device beforehand, or may be taken in from the outside by SIM, IC card, or the like. It may also be inputted to the mobile device manually.

In the above mobile device, the registration request sending means may send the registration request including a user identifier.

In this configuration, by sending a registration request including a user identifier to, for example, the network management device according to claim 3, the network management device is allowed to obtain user attribute information based on the user identifier, and it is also allowed to, based on the user attribute information, obtain equipment information on equipment available to that user. Therefore, available equipment can be changed based on a user attribute of each mobile device. In addition, the user identifier may be stored in the mobile device beforehand, or may be taken in from the outside by SIM, IC card, or the like. It may also be inputted to the mobile device manually. The above mobile device may further comprise: a choice means for indicating available equipment based on equipment information stored in the storage means and allowing a user to choose equipment to be used for a certain process; and a process request sending means for sending a process request to equipment chosen by the choice means, using that equipment's address information included in equipment information stored in the storage means.

As described above, the storage means stores information about equipment available to the user of the mobile device.

In the configuration in which available equipment is indicated based on the equipment information stored in the storage means and equipment to be used is chosen among the indicated equipment, there is no need to negotiate with the network management device about whether the equipment chosen by the user is available or not, and therefore connection time can be reduced.

In the above mobile device, the choice means may indicate available equipment based on equipment information stored in the storage means and may allow a user to choose equipment capable of communicating with another terminal, and the process request sending means may send to equipment chosen by the choice means a negotiation request for communication between that equipment and the other terminal. In this configuration, when, for example, the mobile device cannot carry out multimedia communication, the communication can be realized by other equipment. In addition, as described above, the storage means stores information about equipment available to the user of the mobile device. In the configuration in which available equipment is indicated based on the equipment information stored in the storage means and equipment to be used is chosen among the indicated equipment, there is no need to negotiate with the network management device about whether the equipment chosen by the user is available or not, and therefore connection time can be reduced.

In the above mobile device, the choice means may indicate available equipment based on equipment information stored in the storage means and may allow a user to choose equipment capable of establishing additional communication with another terminal being in communication, and the process request sending means may send a negotiation request for additional communication between equipment chosen by the choice means and the other terminal.

In this configuration, when, for example, the mobile device cannot send and receive images in multimedia communication, the function can be realized by adding other equipment to the communication, and the mobile device, with its function complemented with the other equipment, can communicate with another terminal. In addition, as described above, the storage means stores information about equipment available to the user of the mobile device. In the configuration in which available equipment is indicated based on the equipment information stored in the storage means and equipment to be used is chosen among the indicated equipment, there is no need to negotiate with the network management device about whether the equipment chosen by the user is available or not, and therefore connection time can be reduced.

In the above mobile device, the choice means may indicate available equipment based on equipment information stored in the storage means and may allow a user to choose equipment capable of processing data sent from another terminal, and the process request sending means may send to equipment chosen by the choice means a request for processing the data.

In this configuration, when, for example, the mobile device cannot process facsimile data, the data can be processed by sending the data to other equipment. In addition, as described above, the storage means stores information about equipment available to the user of the mobile device. In the configuration in which available equipment is indicated based on the equipment information stored in the storage means and equipment to be used is chosen among the indicated equipment, there is no need to negotiate with the network management device about whether the equipment chosen by the user is available or not, and therefore connection time can be reduced.

The above mobile device may further comprise: a negotiation request receiving means for receiving a negotiation request sent from another terminal, the negotiation request including communication information about communication; an equipment selection means for, based on communication information included in a received negotiation request, selecting equipment capable of a process related to that negotiation request with reference to the storage means; and a process request sending means for requesting of equipment selected by the equipment selection means a process related to the negotiation request using that equipment's address information included in equipment information stored in the storage means.

In this configuration, when the mobile device receives a negotiation request which it cannot process, it can start communication smoothly by, based on communication information included in the negotiation request, selecting from the storage means equipment capable of a process related to that communication and having the selected equipment conduct the process related to that communication. Incidentally, equipment information may include media information about media which can be processed by that equipment so that the mobile device can select equipment capable of the above process related to the communication.

In addition, as described above, the storage means stores information about equipment available to the user of the mobile device. So, by selecting equipment capable of the above process related to the communication from equipment whose equipment information is stored in the storage means, there will be no need to negotiate with the network management device about whether the equipment chosen as a destination of the process request is available to the user of the mobile device or not, and therefore connection time can be reduced.

The above mobile device may further comprise a choice means for indicating equipment selected by the equipment selection means and allowing the user to choose equipment to be used for a process related to the negotiation request, wherein the process request sending means requests of equipment chosen by the choice means a process related to the negotiation request.

This configuration is desirable because the process can be conducted by equipment desired by the user since the user is allowed to choose equipment to be used.

The network system according to the invention comprises: the above network management device for managing equipment and terminal which are connected to a network; and the above mobile device connected to the network.

Since the system comprises the above network management device and the mobile device, a registration response including equipment information is sent in response to a registration request sent from the mobile device to the network management device. By storing the equipment information included in the registration response, the mobile device can obtain information on available equipment in the first step of registration to a network, and also, based on equipment information stored in the storage means, can grasp available equipment in a subsequent process.

In the above network system, a protocol used for receiving and sending a registration request and a registration response between the mobile device and the network management device may be the same as a protocol used for a process request from the mobile device to equipment.

In this way, an amount of memory can be saved by using a common protocol because the mobile device is not required to have a function to process a plurality of protocols.

In the above network system, the network may be an IP network and the protocol may be SIP.

SIP is desirable because it is a simple protocol and because equipment information, transmission data, or other additional information can be included in a message body.

The communication method according to the invention is a communication method carried out by a network management device which manages, as equipment information, information about equipment connected to a network and also manages a terminal which has just been connected to the network and by a mobile device which has just been connected to the network, and the communication method comprises: a registration request sending step of sending a registration request from the mobile device to the network management device requesting registration as a terminal connected to the network; an obtaining step of obtaining equipment information about equipment connected to the network in response to a registration request received by the network management device; a registration response sending step of sending from the network management device to the mobile device a response to the registration request, the response including obtained equipment information; and a storage step of storing in the mobile device equipment information included in a registration response received by the mobile device.

In this method, since the network management device sends equipment information in response to a registration request sent from the mobile device, the mobile device can obtain information about available equipment in the first step of registration to a network. Additionally, since equipment information is included in the registration response to the registration request, the mobile device can obtain equipment information by a simple sequence comprising a registration request and its response. Incidentally, equipment information may be managed by the network management device itself, or may be managed by a device other than the network management device. In addition, in the storage step, the network management device may store information about equipment available to each user. By storing information about available equipment, authority of a mobile device user can be checked easily by the network management device when the mobile device communicates with equipment.

In the above communication method, the obtaining step, based on user attribute information included in the registration request received by the network management device, may obtain equipment information on equipment available to that user. In order to compare with the above user attribute information, equipment information may include attribute information on a user who is allowed to use that equipment.

Since equipment information on equipment available to that user is obtained based on user attribute information in the obtaining step as described above, available equipment can be changed based on a user attribute of each mobile device.

The above communication method may further comprise: an identifier sending step of sending a user identifier included in a registration request sent in the registration request sending step to a user attribute information management device which manages attribute information on that user; and an attribute information receiving step of receiving attribute information on a user related to the identifier sent from the user attribute information management device; wherein the obtaining step, based on user attribute information received in the attribute information receiving step, obtains equipment information on equipment available to that user.

In this way, attribute information on the user which sent a registration request can be obtained by sending, in the identifier sending step, an identifier included in the registration request to a user attribute information management device and receiving, in the user attribute information receiving step, user attribute information sent in response to that. Additionally, since the obtaining step, based on user attribute information, obtains equipment information on equipment available to that user, available equipment can be changed based on a user attribute of each mobile device. The user identifier may be sent with a password in the identifier sending step so that the user attribute information management device authenticates the user, and therefore network security can be enhanced. The user attribute information management device may be a network server of the mobile device's home (base). The user attribute information management device may also be connected to a network managed by the network management device. In addition, in order to compare with the above user attribute information, equipment information may include attribute information on a user who is allowed to use that equipment.

The above communication method may comprise: a negotiation request receiving step in which the mobile device receives a negotiation request for multimedia communication sent from an external terminal outside the network; a hold step in which the mobile device, in response to a received negotiation request for multimedia communication, puts a connection with the external terminal on hold; an equipment selection step in which the mobile device, based on stored equipment information, selects equipment capable of multimedia communication; a negotiation request transfer step in which the mobile device transfers the negotiation request to equipment selected in the equipment selection step; and a disconnection step in which the mobile device, in response to establishment of connection between equipment to which the negotiation request was transferred and the external terminal, disconnects the external terminal put on hold in the hold step.

In this way, by the mobile device putting a connection with an external terminal on hold in response to a negotiation request for multimedia communication received from the external terminal and transferring the negotiation request to selected equipment capable of multimedia communication, the multimedia communication can be carried out between that equipment and the external terminal. In addition, equipment information stored in the mobile device is information about equipment available to the user. So, by indicating available equipment based on the equipment information and allowing the user to choose among the indicated equipment, there will be no need to negotiate with the network management device about whether the equipment chosen by the user is available or not, and therefore connection time can be reduced.

The above communication method may further comprise a choice step in which the mobile device indicates equipment selected in the equipment selection step and allows a user to choose equipment to carry out the multimedia communication, wherein, in the negotiation request transfer step, the mobile device transfers the negotiation request to equipment chosen in the choice step.

This is desirable because the process can be conducted by equipment desired by the user since the user is allowed to choose equipment to be used.

The above communication method may comprise: a choice step in which the mobile device indicates available equipment based on stored equipment information and allows a user to choose equipment to be used for multimedia communication; and a negotiation request sending step in which the mobile device sends to equipment chosen in the choice step a negotiation request for establishing connection with an external terminal outside the network and carrying out multimedia communication with the external terminal.

In this way, by allowing the user to choose equipment to carry out multimedia communication and sending a negotiation request to that equipment, multimedia communication with an external terminal can be carried out under the initiative of the mobile device. In addition, equipment information stored in the mobile device is information about equipment available to the user. So, by indicating available equipment based on the equipment information and allowing the user to choose among the indicated equipment, there will be no need to negotiate with the network management device about whether the equipment chosen by the user is available or not, and therefore connection time can be reduced.

The above communication method may comprise: a connection step in which the mobile device establishes connection with an external terminal outside the network; a choice step in which the mobile device, during communication between the mobile device and the external terminal, indicates available equipment on the mobile device based on stored equipment information and allows a user to choose equipment to be used for multimedia communication; a connection step in which the mobile device sends a negotiation request to equipment chosen in the choice step and establishes connection between the mobile device and the equipment; and a negotiation request sending step in which the mobile device sends to equipment chosen in the choice step a negotiation request for establishing connection between the external terminal and the equipment.

By this method, when, for example, the mobile device cannot send and receive images in multimedia communication, the function can be realized by adding other equipment to the communication, and the mobile device, with its function complemented with the other equipment, can communicate with another terminal. In addition, equipment information stored in the mobile device is information about equipment available to the user. So, by indicating available equipment based on the equipment information and allowing the user to choose among the indicated equipment, there will be no need to negotiate with the network management device about whether the equipment chosen by the user is available or not, and therefore connection time can be reduced.

The above communication method may comprise: a connection step in which the mobile device establishes connection with an external terminal outside the network; a choice step in which the mobile device, during communication between the mobile device and the external terminal, indicates available equipment on the mobile device based on stored equipment information and allows a user to choose equipment to be used for multimedia communication; and a sending step in which the mobile device sends a negotiation request for establishing multipoint connection between equipment chosen in the choice step, the external terminal, and the mobile device.

In this method in which a multipoint negotiation request for establishing multipoint connection between equipment chosen in the choice step, the external terminal, and the mobile device is sent to a server which manages multipoint connection, the server allows multipoint connection between the three. This server for managing multipoint connection may be inside a network managed by the network management device, or may be outside the network.

The above communication method may comprise: a connection step in which the mobile device establishes connection with an external terminal outside the network; a choice step in which the mobile device, in response to data received from the external terminal which the mobile device cannot process, indicates available equipment based on stored equipment information and allows a user to choose equipment to be used for processing the data; and a data sending step in which the mobile device sends the data to equipment chosen in the choice step.

In this method, when, for example, the mobile device cannot process data of a facsimile or the like, the data can be processed by sending the data to other equipment. In addition, equipment information stored in the mobile device is information about equipment available to the user. So, by indicating available equipment based on the equipment information and allowing the user to choose among the indicated equipment, there will be no need to negotiate with the network management device about whether the equipment chosen by the user is available or not, and therefore connection time can be reduced.

### Brief Description of Drawings

Figure 1A shows an example of a data structure of a registration response to be sent from a network server to a mobile device.
Figure 1B shows the SIP message format adhered to by a registration response.
Figure 2 shows a configuration of a network system according to an embodiment.
Figure 3 is a block diagram showing a configuration of the network server according to the embodiment.
Figure 4 shows an example of data recorded on a user information recording medium of the network server.
Figure 5 shows an example of data recorded on an equipment information recording medium of the network server.
Figure 6 shows a configuration of a mobile device according to the embodiment.
Figure 7 shows an example of data recorded on an available equipment information recording medium of the mobile device.
Figure 8 is a block diagram showing a configuration of a PC terminal connected to a local IP network.
Figure 9 is a block diagram showing a configuration of a facsimile connected to the local IP network.
Figure 10 shows a sequence of registration of the mobile device to the network server by a communication method according to a first embodiment.
Figure 11 is a flowchart showing a process in the mobile device in the registration sequence.
Figure 12 is a flowchart showing a process in the network server in the registration sequence.
Figure 13 is a flowchart showing a process in a home server in the registration sequence.
Figure 14 s a flowchart showing a process in the mobile device in the registration sequence.
Figure 15 shows a screen with a registration result.
Figure 16A shows an example of a data structure of a registration request to be sent from the mobile device to the network server.
Figure 16B shows the SIP message format adhered to by a registration request.
Figure 17A shows an example of a data structure of a registration request to be sent from the network server to the home server.
Figure 17B shows the SIP message format adhered to by a registration request.
Figure 18A shows an example of a data structure of a registration response to be sent from the home server to the network server.
Figure 18B shows the SIP message format adhered to by a registration response.
Figure 19 shows a sequence of a communication method according to a second embodiment.
Figure 20 is a flowchart showing a process in a mobile device in the communication method according to the second embodiment.
Figure 21 is a flowchart showing a process in a PC terminal in the communication method according to the second embodiment.
Figure 22A shows an example of a data structure of a transfer request to be sent from the mobile device to the PC terminal in the second embodiment.
Figure 22B shows the SIP message format adhered to by a transfer request.
Figure 23A shows an example of a data structure of a negotiation request to be sent from the PC terminal to an external terminal in the second embodiment.
Figure 23B shows the SIP message format adhered to by a negotiation request.
Figure 24 shows a sequence of a communication method according to a third embodiment.
Figure 25 is a flowchart showing a process in a mobile device in the communication method according to the third embodiment.
Figure 26 shows a sequence of a communication method according to a fourth embodiment.
Figure 27 is a flowchart showing a process in a mobile device in the communication method according to the fourth embodiment.
Figure 28 is a flowchart showing a process in a PC terminal in the communication method according to the fourth embodiment.
Figure 29A shows an example of a data structure of a negotiation request to be sent from the mobile device to the PC terminal in the fourth embodiment.
Figure 29B shows the SIP message format adhered to by a negotiation request.
Figure 30A shows an example of a data structure of a transfer request to be sent from the mobile device to the PC terminal in the fourth embodiment.
Figure 30B shows the SIP message format adhered to by a transfer request.
Figure 31 shows a sequence of a communication method according to a modification of the fourth embodiment.
Figure 32 shows a sequence of a communication method according to a fifth embodiment.
Figure 33 is a flowchart showing a process in a mobile device in the communication method according to the fifth embodiment.
Figure 34 is a flowchart showing a process in a facsimile in the communication method according to the fifth embodiment.
Figure 35A shows an example of a data structure of a data transmission request to be sent from an external terminal to the mobile device in the fifth embodiment.
Figure 35B shows the SIP message format adhered to by a data transmission request.
Figure 36A shows an example of a data structure of a data transfer request to be sent from the mobile device to a PC terminal in the fifth embodiment.
Figure 36B shows the SIP message format adhered to by a data transfer request.
Figure 37 shows a sequence of a communication method according to a sixth embodiment.
Figure 38 is a flowchart showing a process in a mobile device in the communication method according to the sixth embodiment.
Figure 39 is a flowchart showing a process in a facsimile in the communication method according to the sixth embodiment.
Figure 40A shows an example of a data structure of a data transmission instruction to be sent from the mobile device to a PC terminal in the sixth embodiment.
Figure 40B shows the SIP message format adhered to by a data transmission instruction.
Figure 41A shows an example of a data structure of a data transmission request to be sent from the mobile device to the PC terminal in the sixth embodiment.
Figure 41B shows the SIP message format adhered to by a data transmission request.

### Best Mode of Embodying the Invention

A network system according to an embodiment of the invention will now be described with reference to the drawings. If possible, the same parts are designated by the same letters and are not described repeatedly.

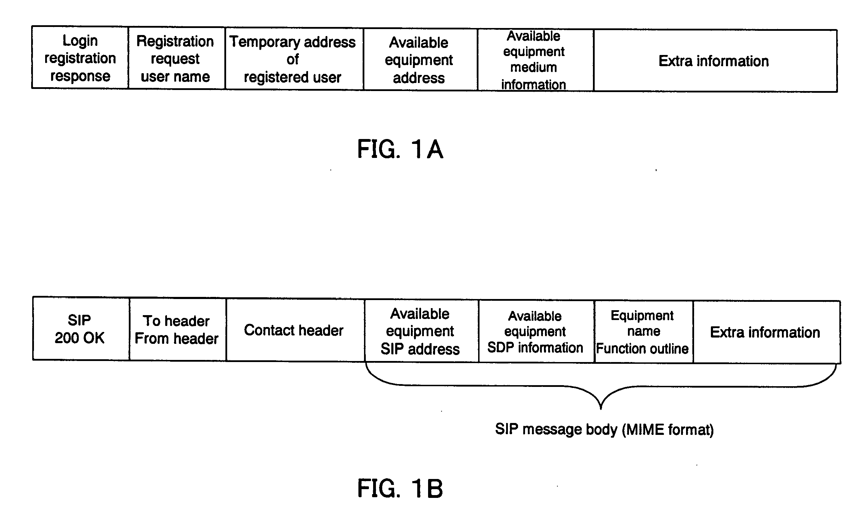

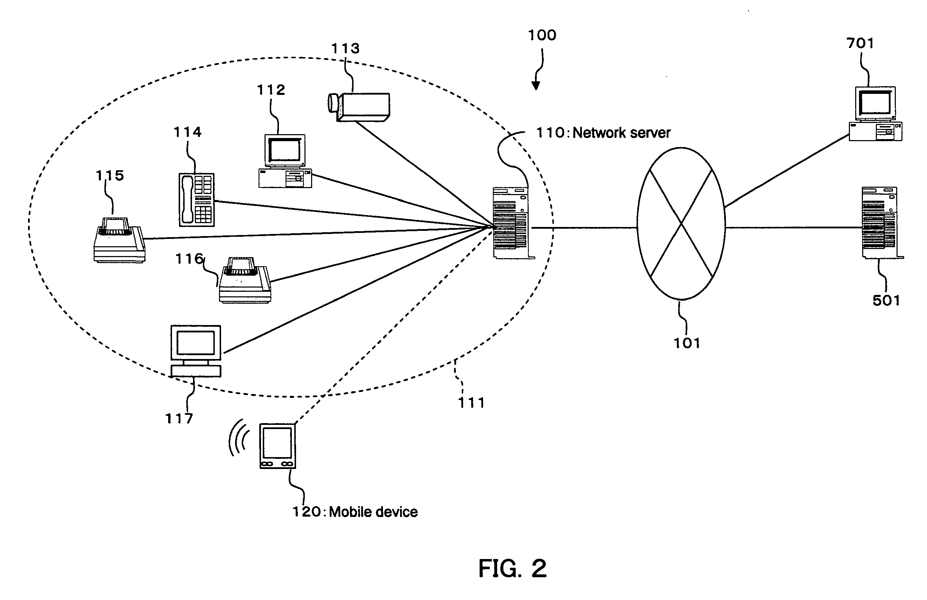

Figure 1A shows a data structure of a registration response to be sent from a network server according to the embodiment to a mobile device, and Figure 1B shows the SIP message format adhered to by the registration response, as well as showing a characteristic of the invention. First, a network system according to the embodiment will be described with reference to Figures 2 to 18B, and then the data structure of a registration response will be described with reference to Figures 1A and 1B.

Figure 2 shows a configuration of the network system according to the embodiment. The network system 100 according to the embodiment has the network server 110 which manages a local IP network 111, and the mobile device 120 capable of connecting to the local IP network 111. A PC terminal 112, a network camera 113, an IP phone 114, a fax 115, a printer 116, a display 117, and other equipment are connected to the local IP network 111. The network server 110 has a function to manage the equipment 112 to 117 or terminals connected to the local IP network 111. A home server 501 for managing information about a user of the mobile device 120, and an external terminal 701 are connected to an IP network 101. The home server 501 may manage information for authenticating a user as well as user attribute information. Now, each component composing the network system 100 will be described.

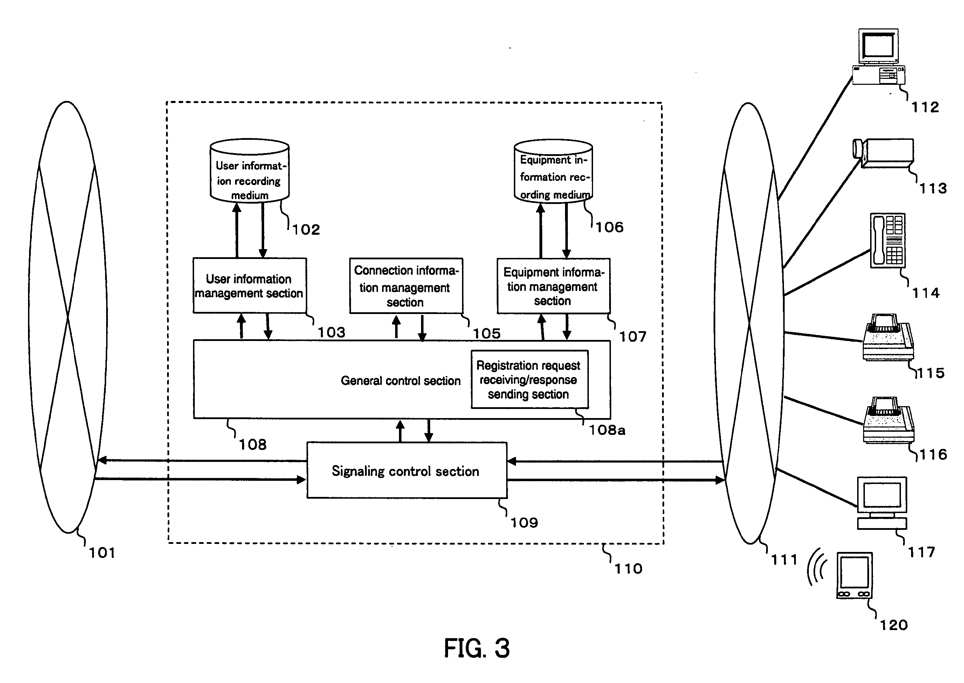

Figure 3 is a block diagram showing a configuration of the network server 110. The network server 110 has a user information recording medium 102, a user information management section 103, a connection information management section 105, an equipment information recording medium 106, an equipment information management section 107, a general control section 108, and a signaling control section 109.

The user information recording medium 102 is a recording medium for storing information about a terminal being connected to the local IP network 111. The user information management section 103 has a function to manage data recorded on the user information recording medium 102, and it records data on or obtains data from the user information recording medium 102. Next, data recorded on the user information recording medium 102 will be described specifically.

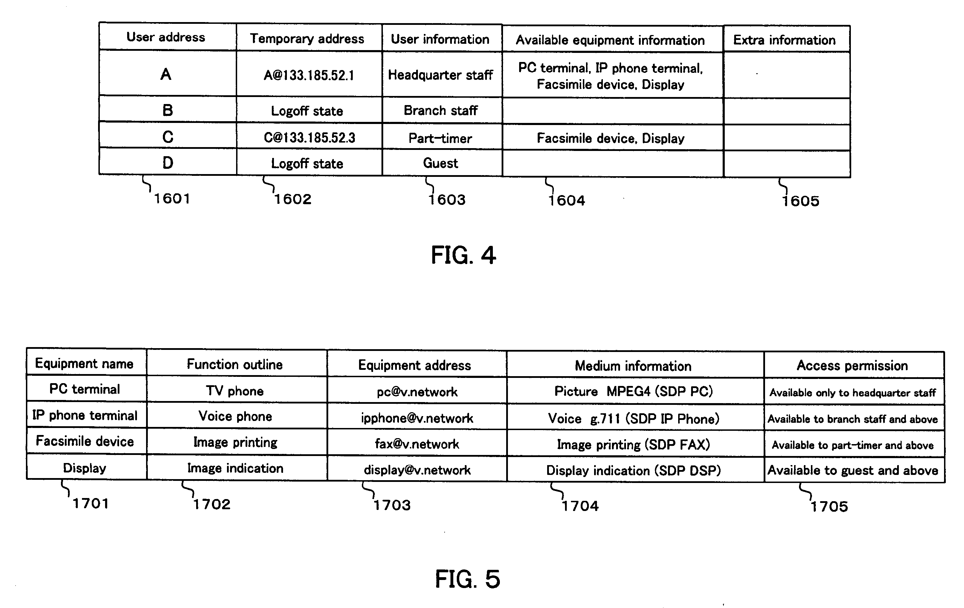

Figure 4 shows an example of data recorded on the user information recording medium 102. A user address 1601, a temporary address 1602, a user information 1603, available equipment information 1604, and extra information 1605 are stored in the user information recording medium 102.

The user address 1601 is information on an address allocated to a user of each terminal, and is an address uniquely determined in the IP network 101 (e.g. address including identification information (domain name etc.) on the home network of the user).

The temporary address 1602 is an address to be used temporarily in the local IP network 111. A temporary address is generated based on an IP address given by a DHCP server at the time of connection to the local IP network 111. Incidentally, the network server 110 may also have a function of a DHCP server.

The temporary address 1602 is dynamically given to a terminal being connected to the local IP network 111, and it is not given to a terminal not being connected. In this example, the temporary address 1602 is not given to the user whose user address 1601 is "B" because the user is not logged on. The user information 1603 is information about a user attribute or the like. Information about a group to which a user belongs is stored in this example.

The available equipment information 1604 is information about equipment available to each user. Information about equipment available to a user is determined based on information stored in the equipment information recording medium 106 when a registration request sent from the mobile device 120 is received. By storing this information, the network server 110 can restrict access of the mobile device 120 to equipment which is not allowed to be used, as described below. That is, a process request from the mobile device 120 to equipment is sent via the network server 110. At this time, the network server 110 judges based on the available equipment information 1604 whether or not the equipment to which the process request was sent is available to the user of the mobile device 120 which sent the process request. If the user does not have authority to use it, the network server 110 does not send the process request to the equipment but sends a negative acknowledgement to the mobile device 120.

Moreover, the user information recording medium 102 has an area to record extra information 1605, so that additional information can be added as required. An example of such additional information would be a password for authenticating the user.

The connection information management section 105 manages information about the current status of each terminal and equipment. The current status to be managed here is whether or not they are communicating with an external terminal, whether or not they are processing a process requested by a terminal, or other connection information or present information. Based on information about such current status, the following judgment can be made smoothly. For example, when a process request is sent from the mobile device 120, the network server 110 can judge whether or not the request can be processed by the equipment, by referring to the current status and without querying the equipment. Then, if it becomes clear from a result of the judgment that the request cannot be processed, the network server 110 can send to the mobile device 120 a negative acknowledgement to the process request. In addition, the network server 110 can also send information about the current status to the mobile device 120 at any time. In this way, the mobile device 120 can indicate the current status of each piece of equipment, and can also derive the current status of the equipment together when selecting available equipment. Incidentally, the SIP-defined SUBSCRIBE/NOTIFY command or other protocol may be used for notice of the current status from the network server 110 to the mobile device 120.

The equipment information recording medium 106 is a recording medium on which information about equipment connected to the local IP network 111 is recorded. The equipment information management section 107 has a function to manage data of the equipment information recording medium 106, and it records data on or obtains data from the equipment information recording medium 106. Next, data recorded on the equipment information recording medium 106 will be described specifically.

Figure 5 shows an example of data stored in the equipment information recording medium 106. Information about an equipment name 1701, a function outline 1702, an equipment address 1703, medium information 1704, and access permission 1705 is recorded on the equipment information recording medium 106. The equipment name 1701 is information about a name of equipment, the function outline 1702 is information about an outline of equipment indicated in the equipment name 1701, and the equipment address 1703 is address information on equipment. The medium information 1704 is information about a medium which each piece of equipment can process, or SDP information. As can be seen from the example shown in Figure 5, the PC terminal can process an image, and the image compression method is MPEG-4. The access permission 1705 is information about authority to access the equipment. Information about a user allowed to access is recorded here. As can be seen, for example, only headquarter staff are allowed to access the PC terminal while other users including branch staff and part-timers are not.

The signaling control section 109 has a function to receive a signal from and send a signal to the equipment 112 to 117 and the mobile device 120 which are connected to the local IP network 111, and has a function to receive a signal from and send a signal to the external terminal 701 which is connected to the IP network 101.

The general control section 108 has a function to control each component, i.e. the user information management section 103, the connection information management section 105, the equipment information management section 107, and the signaling control section 109. Additionally, the general control section 108 has a registration request receiving/response sending section 108a. Upon receiving by means of the signaling control section 109 a registration request sent from the mobile device 120 connected to the local IP network 111, the registration request receiving/response sending section 108a makes the signaling control section 109 send to the mobile device 120 a response including all or part of information recorded on the equipment information recording medium 106.

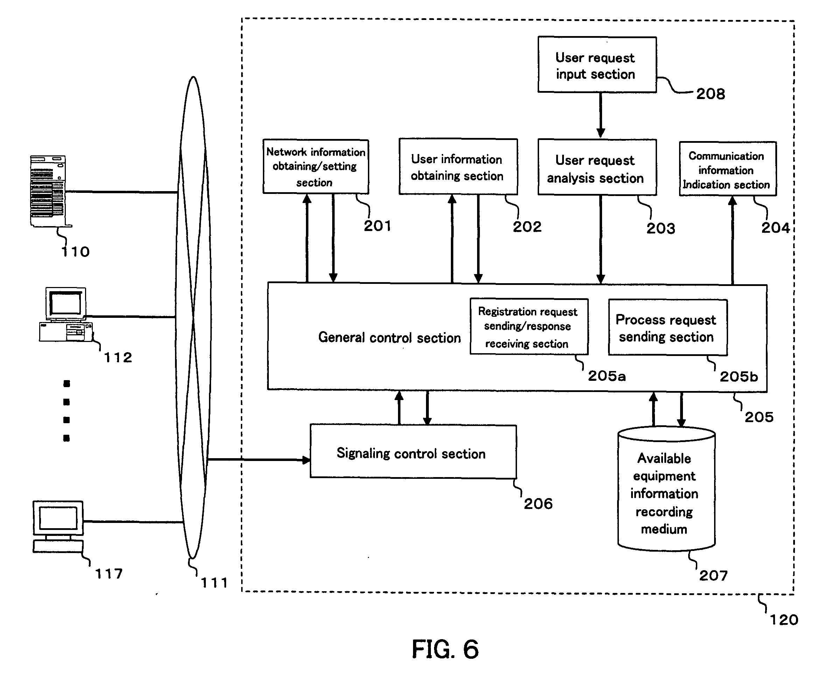

Figure 6 is a block diagram showing a configuration of the mobile device 120. The mobile device 120 has a network information obtaining/setting section 201, a user information obtaining section 202, a user request analysis section 203, a communication information indication section 204, a general control section 205, a signaling control section 206, an available equipment information recording medium 207, and a user request input section 208.

The network information obtaining/setting section 201 has a function to obtain information on a network to which the mobile device 120 is connected and set the obtained information in the mobile device 120. The network information to be obtained here is, for example, a temporary address and an address of the network server 110. Incidentally, a temporary address is generated based on an IP address given by a DHCP server.

The user information obtaining section 202 has a function to obtain information about the user of the mobile device 120. In a case where the user who uses the mobile device 120 is predetermined, as is the case with a cellular phone for example, user information may be stored in the mobile device 120. In this case, the user information obtaining section 202 obtains the stored user information. In a case where a common mobile device is used by multiple people, the user information obtaining section 202 may be configured, for example, to be able to read a SIM or IC card which records user information so that the user information is read from these recording media, or user information may be allowed to be inputted manually at the time of use.

The user request input section 208 has a function to allow a user to input a user request including, for example, a request for choosing equipment to be used. The user request analysis section 203 has a function to analyze a user request inputted via the user request input section 208.

The communication information indication section 204 has a function to indicate information about communication. The signaling control section 206 has a function to receive a signal from and send a signal to the network server 110 and the home server 501.

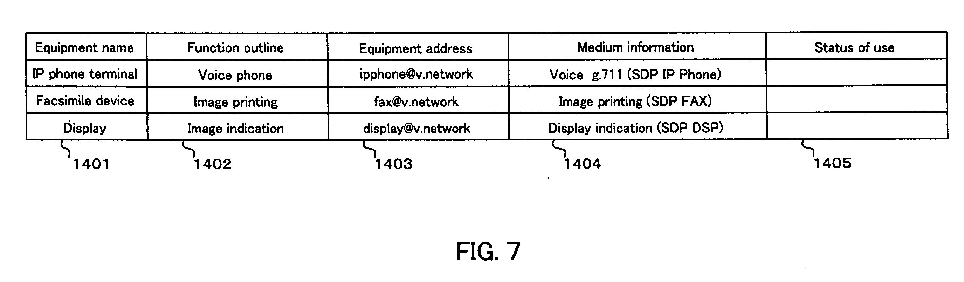

The available equipment information recording medium 207 is a recording medium for recording information about equipment connected to the local IP network 111. Figure 7 shows an example of data recorded on the available equipment information recording medium 207. Information about an equipment name 1401, a function outline 1402, an equipment address 1403, medium information 1404, and a status of use 1405 is recorded on the available equipment information recording medium 207. The contents of each piece of information, i.e. the equipment name 1401, the function outline 1402, the equipment address 1403, and the medium information 1404, are the same as the contents of each piece of information recorded on the equipment information recording medium 106 of the network server 110, i.e. the equipment name 1701, the function outline 1702, the equipment address 1703, and the medium information 1704. Among equipment information recorded on the equipment information recording medium 106 of the network server 110, only information on equipment available to the user of the mobile device 120 is recorded on the available equipment information recording medium 207. These pieces of information in the available equipment information recording medium 207 are updated based on information recorded on the equipment information recording medium 106 of the network server 110. The status of use 1405 is information about whether the equipment is used now or not, information about a track record of usage, or the like.

The general control section 205 has a function to control each component, i.e. the network information obtaining/setting section 201, the user information obtaining section 202, the user request analysis section 203, the communication information indication section 204, and the signaling control section 206. The general control section 205 also has a registration request sending/response receiving section 205a and a process request sending section 205b. The registration request sending/response receiving section 205a has a function to, when the mobile device 120 is connected to the local IP network 111, make the signaling control section 206 send to the network server 110 a registration request for registration as a connected terminal. The registration request to be sent here preferably includes user attribute information or a user identifier of the user of the mobile device 120. Upon receiving by means of the signaling control section 206 a registration request response sent from the network server 110, the registration request sending/response receiving section 205a writes to the available equipment information recording medium 207 based on the content of the response. The process request sending section 205b has a function to send a process request, a negotiation request, or the like to equipment connected to the local IP network 111 referring to the available equipment information recording medium 207.

Next, equipment connected to the local IP network 111 will be described. The PC terminal 112, the IP phone 114, and other various kinds of equipment are connected to the local IP network 111. Equipment other than the equipment 112 to 117 shown in Figure 2 can also be connected. Configurations of equipment will be described here taking the PC terminal 112 and the facsimile 115 as examples.

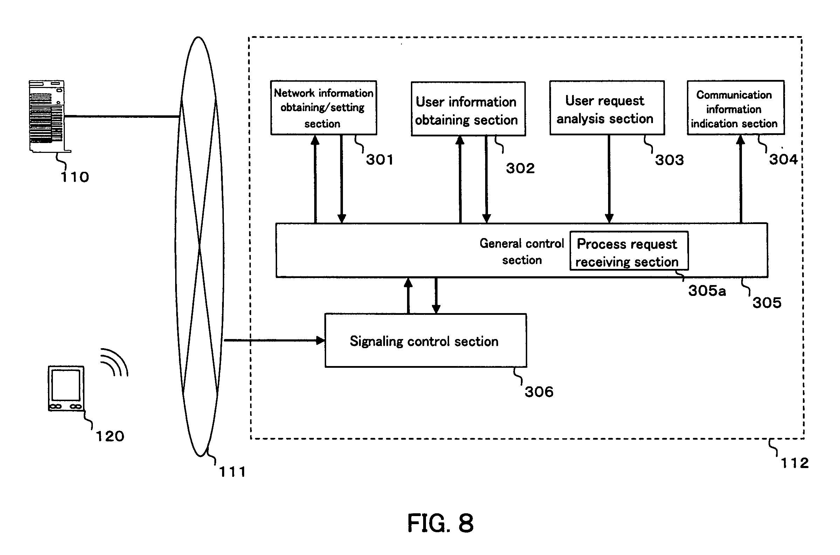

Figure 8 is a block diagram showing a configuration of the PC terminal 112. The PC terminal 112 has a network information obtaining/setting section 301, a user information obtaining section 302, a user request analysis section 303, a communication information indication section 304, a general control section 305, and a signaling control section 306.

The network information obtaining/setting section 301 has a function to obtain information on a network to which the PC terminal 112 is connected and set the obtained information in the PC terminal 112.

The user information obtaining section 302 has a function to obtain information about a user of the PC terminal 112. In a case where the user who uses the PC terminal 112 is predetermined, user information may be stored in the PC terminal 112. In this case, the user information obtaining section 302 obtains user information stored beforehand. In a case where a common PC terminal is used by multiple people, the user information obtaining section 302 may be configured, for example, to be able to read a SIM or IC card which records user information so that the user information is read from these recording media, or user information may be allowed to be inputted manually at the time of use.

The user request analysis section 303 has a function to analyze a process request inputted by a user. The communication information indication section 304 has a function to indicate information about communication. The signaling control section 306 has a function to receive a signal from and send a signal to the network server 110. The general control section 305 has a function to control each component, i.e. the network information obtaining/setting section 301, the user information obtaining section 302, the user request analysis section 303, the communication information indication section 304, and the signaling control section 306. The general control section 305 also has a process request receiving section 305a. Upon receiving via the signaling control section 306 a process request or a negotiation request sent from the mobile device 120, the general control section 305 controls each component such that the requested process is carried out.

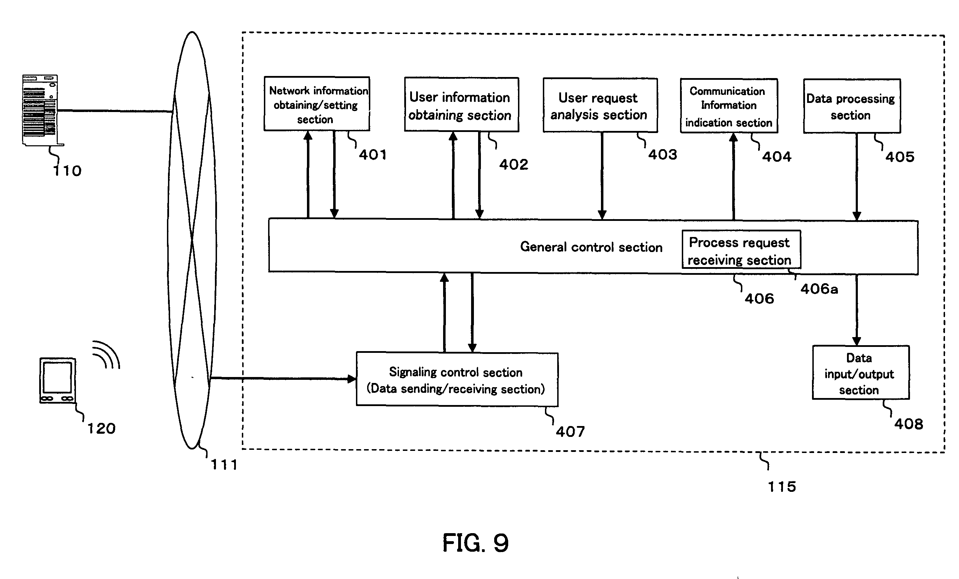

Figure 9 is a block diagram showing a configuration of the facsimile 115. The facsimile 115 has a network information obtaining/setting section 401, a user information obtaining section 402, a user request analysis section 403, a communication information indication section 404, a data processing section 405, a general control section 406, a signaling control section 407, and a data input/output section 408.

The network information obtaining/setting section 401 has a function to obtain information on a network to which the facsimile 115 is connected and set the obtained information in the facsimile 115.

The user information obtaining section 402 has a function to obtain information about a user of the facsimile 115. In a case where the user who uses the facsimile 115 is predetermined, user information may be stored in the facsimile 115. In this case, the user information obtaining section 402 obtains user information stored beforehand. In a case where a common facsimile is used by multiple people, the user information obtaining section 402 may be configured, for example, to be able to read a SIM or IC card which records user information so that the user information is read from these recording media, or user information may be allowed to be inputted manually at the time of use.

The user request analysis section 403 has a function to analyze a process request inputted by a user. The communication information indication section 404 has a function to indicate information about communication. The data processing section 405 has a function to process received data or inputted data. The signaling control section 407 has a function to receive a signal from and send a signal to the network server 110, which allows facsimile data to be received from and sent to another terminal. The data input/output section 408 has a function to output received facsimile data and input facsimile data.

The general control section 406 has a function to control each component, i.e. the network information obtaining/setting section 401, the user information obtaining section 402, the user request analysis section 403, the communication information indication section 404, the data processing section 405, the signaling control section 407, and the data input/output section 408. The general control section 406 also has a process request receiving section 406a. Upon receiving via the signaling control section 407 a process request or a negotiation request sent from the mobile device 120, the general control section 406 controls each component such that the requested process is carried out. Incidentally, though a case where the process request receiving section 406a receives facsimile data via communication which goes through the network server 110 is described here, there can be a configuration in which facsimile data is received via direct communication with the mobile device 120 (e.g. using an infrared interface etc.).

Communication methods employed by the network system 100 according to the embodiment will now be described. First, a communication method by which the mobile device 120 is connected to the local IP network 111 at a destination and is registered with the network server 110 will be described. Secondly, a communication method using equipment connected to the local IP network 111 will be described.

### (First Embodiment)

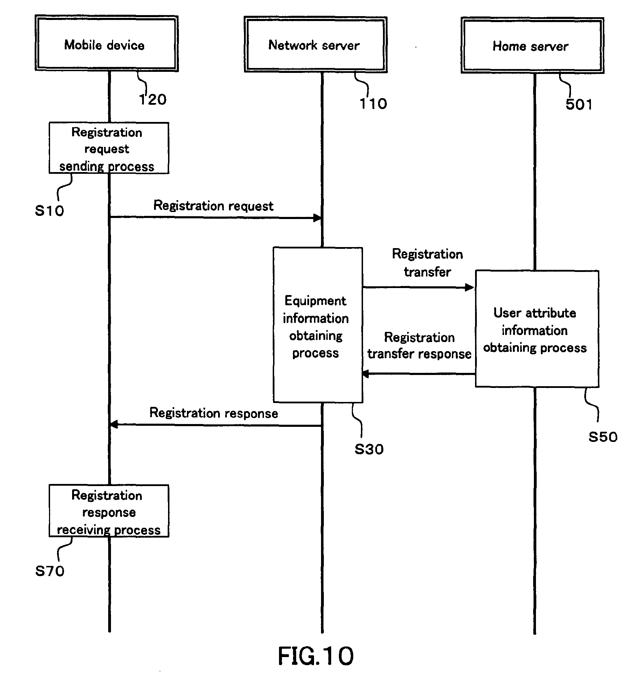

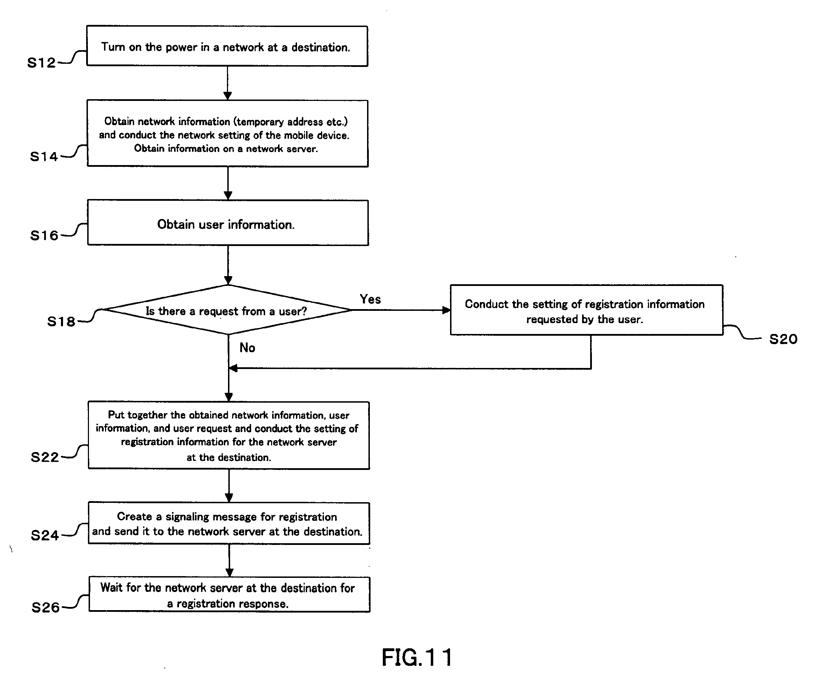

Figure 10 is a flowchart showing an outline of operation in which the mobile device 120 is registered with the network server 110, and Figures 11 to 14 are flowcharts showing detailed operation in which the mobile device 120 is registered with the network server 110. To begin with, the outline of the registration sequence will be described with reference to Figure 10.

When the mobile device 120 is connected to the local IP network 111 and is registered with the network server 110 by means of the communication method according to a first embodiment, the mobile device 120 conducts a registration request sending process for sending a registration request (S10) in the first place, so that a registration request is sent from the mobile device 120 to the network server 110.

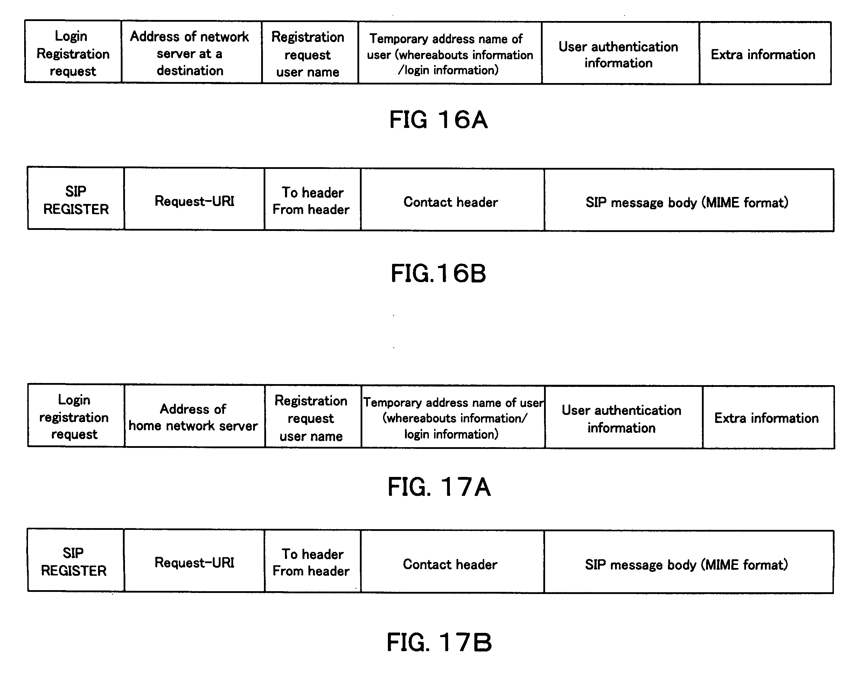

A data structure of a registration request to be sent at this time is shown in Figure 16A. Figure 16A shows a data structure of a registration request and Figure 16B shows the SIP message format adhered to by a registration request. As shown in Figures 16A and 16B, a registration request has a data structure following the SIP message format; has a REGISTER command indicating that it is a registration request, which is followed by an address of the network server 110 at a destination as a Request-URI, a user name requested to be registered as To header/From header, a temporary user address as a Contact header; and has user authentication information in a message body. Incidentally, authentication information described in the message body is not always required, and the message body may have no description when there is no need for authentication.

Upon receiving a registration request sent from the mobile device 120, the network server 110 registers the mobile device 120 as a terminal connected to the local IP network 111 and also conducts an equipment information obtaining process (S30) for obtaining equipment available to a user of the mobile device 120. In this equipment information obtaining process, if required, the registration request is transferred to the home server 501 which manages user attribute information, and then the home server 501 is made to conduct a user attribute information obtaining process (S50) for obtaining user attribute information.

Figure 17A shows a data structure of a registration request to be transferred from the network server 110 to the home server 501, and Figure 17B shows the SIP message format adhered to by a registration request to be transferred. As shown in Figures 17A and 17B, a registration request to be transferred to the home server 501 is the same data as a registration request sent from the mobile device 120 except for its Request-URI being rewritten to an address of the home server 501, and has a data structure following the SIP message format. Upon receiving a registration request, the home server 501, based on a registration request user name included in the registration request, conducts a user attribute information obtaining process (S50) for obtaining user attribute information on that user, and sends a response including the obtained user attribute information to the network server 110 as a registration transfer response.

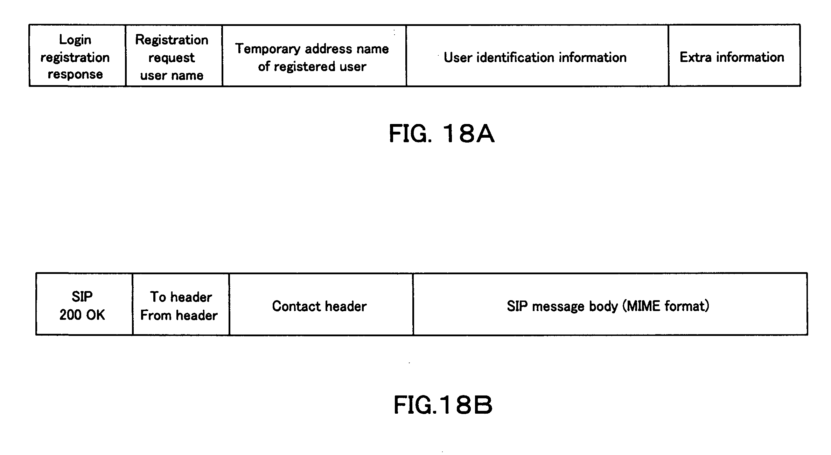

Figure 18A shows a data structure of a registration transfer response to be sent from the home server 501 to the network server 110, and Figure 18B shows the SIP message format adhered to by the registration response. A registration transfer response has a 200 OK command indicating an acknowledgment, which is followed by a registration user name as To header/From header and a temporary user address as a Contact header, and has user identification information in a message body. User identification information includes information about an authentication result and user attribute information. Incidentally, described here is a case where message exchange between the foreign network server 110 and the home network server 501 too is carried out using the SIP. However, since an extended protocol stack etc. presents no problem among servers as compared to a mobile device, there may be a configuration in which the network server 110 sends to the home server 501 a content of a registration message that is received from the mobile device 120 on the SIP and is altered to follow a protocol other than the SIP, and then sends to the mobile device 120 a response message that is conveyed from the home server 501 on a protocol other than the SIP and is converted to the SIP.

Upon obtaining available equipment by the equipment information obtaining process (S30), the network server 110 sends a registration response including the equipment information to the mobile device 120. Figure 1A shows a data structure of a registration response to be sent from the network server 110 to the mobile device 120, and Figure 1B shows the SIP message format adhered to by the registration response. A registration response has a 200 OK command indicating an acknowledgment, which is followed by a registration request user name as To header/From header and a temporary user address as a Contact header, and has an available equipment address, available equipment medium information, an equipment name, and a function outline in a message body. Upon receiving a registration response, the mobile device 120, based on equipment information included in a message body of the registration response, conducts a registration response receiving process (S70) for updating information on the available equipment information recording medium 207.

The above-mentioned registration sequence will now be described in detail concentrating on processes conducted by each of the mobile device 120, the network server 110, and the home server 501.

Figure 11 is a flowchart illustrating detailed operation of the registration request sending process (S10) in the mobile device 120. First, the power of the mobile device 120 is turned on in the local IP network 111 at a destination etc., for example (S12). After the power is turned on, the mobile device 120 obtains network information (an address temporarily allocated to the mobile device 120 in the network 111, etc.) on the local IP network 111 by the network information obtaining/setting section 201 and sets it in the mobile device 120 (S14). The mobile device 120 also obtains address information on the network server 110 by the network information obtaining/setting section 201 and sets it in the mobile device 120 (S14). Then, the mobile device 120 obtains user information by the user information obtaining section 202 (S16). In a case where user information is stored in the mobile device 120 beforehand, the user information is read out. In a case where user information is to be obtained from the outside, user authentication can be conducted by means of SIM, IC card, iris recognition, fingerprint authentication, or the like so that user information accumulated in a SIM or an IC card can be obtained. User information may also be inputted by key entry.

The mobile device 120 then judges whether there is a request from a user or not by means of the user request analysis section 203 (S18). The request here is a request concerning registration to the network server 110. When judged that there is a request from a user, the general control section 205 sets registration information requested by the user (S20), and the process goes on to the next step S22. When judged that there is not a request from a user, the process goes on to the next step S22 without going through the step S20.

The general control section 205 of the mobile device 120 then sets registration information for the network server 110 based on the obtained network information, the user information, and the user request (S22). The mobile device 120, based on the set registration information, creates a signaling message for registration request (see Figure 16A) by means of the signaling control section 206. Information for creating the signaling message for registration request will be described here. Pieces of information to be described in the Request-URI and the Contact header are the address of the network server 110 and the user's temporary address (this is to be recorded as the temporary address 1602) respectively which were obtained by the network information obtaining/setting section 201. Information to be described in the To header/From header is the user name (corresponding to the user address 1601) obtained by the user information obtaining section 202. Information to be described in a message body is authentication information obtained by the user information obtaining section 202. The authentication information can include user attribute information (corresponding to the user information 1603) or a password (to be compared with the extra information 1605 etc.), but both of them are optional and need not be included if not required. The mobile device 120 sends this registration request to the network server 110 (S24), and after sending the registration request, the mobile device 120 waits for the network server 110 to send a registration response (S26). A process in the mobile device 120 after receiving a registration response will be described in a registration response receiving process (S70) part.

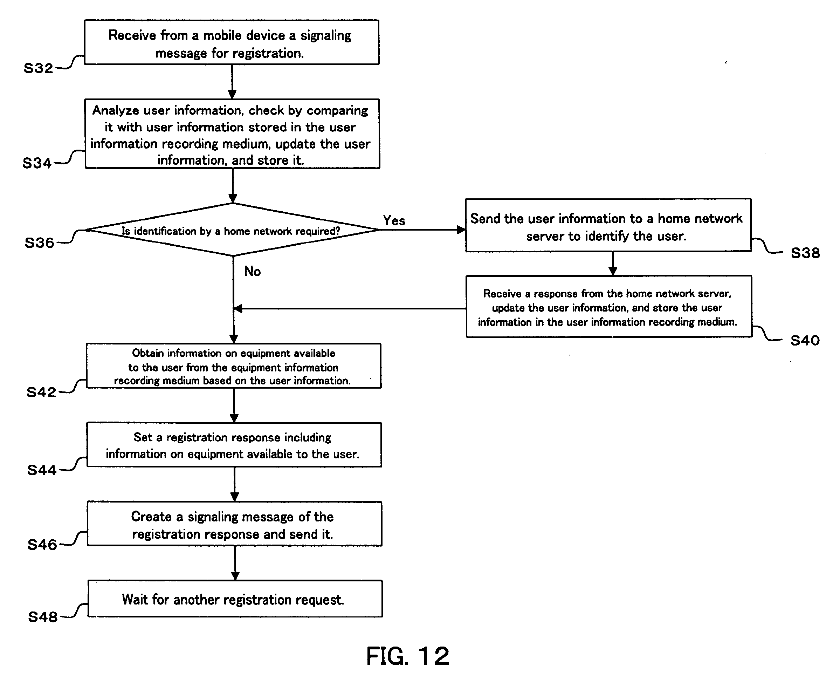

Operation of the network server 110 will be described next with reference to Figure 12. Figure 12 is a flowchart showing detailed operation of the equipment information obtaining process in the network server 110 upon receiving a registration request (S30).

First, the network server 110 receives by means of the signaling control section 109 a signaling message sent from the mobile device 120 (S32). The network server 110 analyzes the signaling message (see Figure 16A) to identify that the signaling message is a REGISTER command (registration request), and further obtains user information from the signaling message. The network server 110 then compares the user information obtained from the signaling message with user information recorded on the user information recording medium 102 to confirm the user of the mobile device 120 who sent the registration request, and updates the user information recording medium 102 by means of the user information management section 103 (S34).

Next, the network server 110 judges whether identification by the home server 501 is required or not by means of the general control section 108 (S36). When judged that identification by the home server 501 is required, the network server 110 transfers the registration request (see Figure 17A) to the home server 501 by means of the signaling control section 109 (S38).

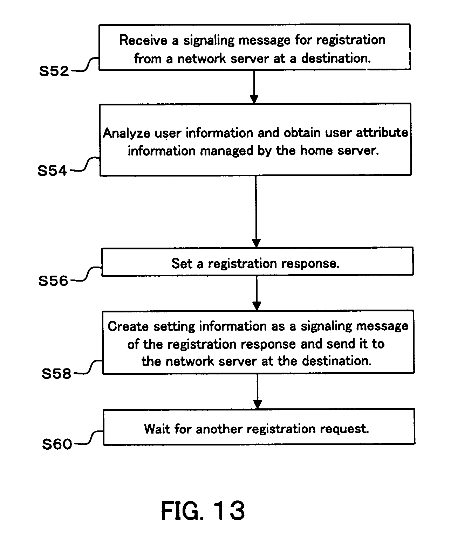

Operation of the home server 501 to which a registration request is transferred will be described here with reference to Figure 13. Figure 13 illustrates the user attribute information obtaining process in the home server 501 upon receiving a transfer of a registration request (S50). As shown in Figure 13, upon receiving a signaling message sent from the network server 110 (S52), the home server 501 analyzes the received signaling message to identify that the signaling message is a REGISTER command (registration request), and further analyzes information included in the signaling message. The home server 501 then authenticates based on user authentication information included in the signaling message, also obtains user attribute information managed by the home server 501 (S54), and sets a registration response (S56). Then, the home server 501 creates setting information as a signaling message of the registration response and sends the created signaling message to the network server 110 (S58). After that, the home server 501 waits for another registration request (S60).

Now, back to the description of the equipment information obtaining process in the network server 110 (S30). The network server 110 receives a response sent from the home server 501 and, if the user is properly authenticated, updates the user information recording medium 102 by means of the user information management section 103 (S40).

The network server 110 then obtains equipment information on equipment available to the user from the equipment information recording medium 106 by means of the equipment information management section 107 (S42). Available equipment is obtained here based on the access permission 1705 recorded on the equipment information recording medium 106 and user attribute information on the user of the mobile device 120. The network server 110 then sets a registration response including the obtained equipment information by means of the general control section 108 (S44), and then creates a signaling message of the registration response (see Figure 1A) by means of the signaling control section 109. Explaining the registration response to be created here, pieces of information to be described in the To header/From header and the Contact header are carried on from information included in the registration request. Information to be described in the message body is information obtained from the equipment address 1703 and the medium information 1704 and the like recorded on the equipment information recording medium 106. The network server 110 sends the created registration response to the mobile device 120 (S46). After that, the network server 110 waits for another mobile device to send a registration request (S48).

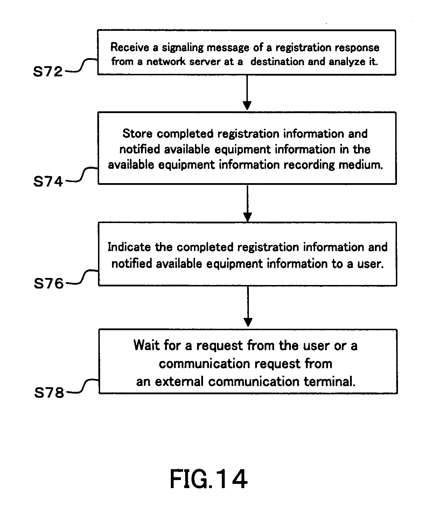

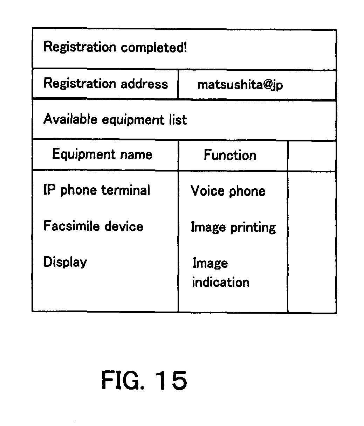

Operation of the mobile device 120 upon receiving a registration response sent from the network server 110 will be described next with reference to Figure 14. Figure 14 is a flowchart showing detailed operation of the registration response receiving process in the mobile device 120 (S70). The mobile device 120 receives by means of the signaling control section 206 a signaling message sent from the network server 110 and analyzes the content of the signaling message (S72). The general control section 205 of the mobile device 120 then records on the available equipment information recording medium 207 the received registration response and equipment information included in the registration response as the equipment address 1403, the medium information 1404, and the like (S74), and indicates a registration completion screen as shown in Figure 15 on the communication information indication section 204 in order to notify the user that the registration of equipment information is completed (S76). This screen indication allows the user to know available equipment at a glance. After that, the mobile device 120 waits for input of a process request from the user or for a communication request from the external terminal 701 (S78).

In this way, in the network system 100 according to the embodiment, the mobile device 120 can record equipment information about available equipment on the available equipment information recording medium 207 at the time of registration to the network server 110 since equipment information is sent in response to a registration request sent from the mobile device 120 to the network server 110. Additionally, since equipment information is included in a registration response to a registration request as shown in Figure 1A, any special sequence for obtaining equipment information is not required to be provided, and the sequence can be simplified.

### (Second Embodiment)

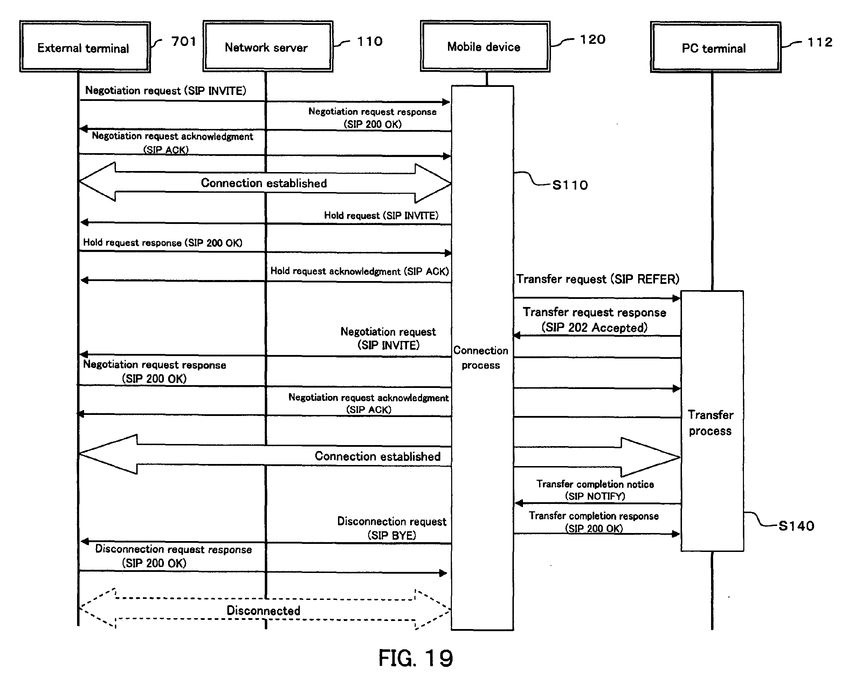

A communication method for communicating using the equipment 112 to 117 in the network system 100 by means of the mobile device 120 according to the embodiment will be described next. The communication method according to a second embodiment is a communication method in which, when the mobile device 120 receives a negotiation request for multimedia communication from the external terminal 701 outside the network, the communication with the external terminal 701 is carried out using the PC terminal 112. The description here is about multimedia communication between a mobile device connected to a network and an external terminal outside the network. However, also in a case of multimedia communication with a terminal connected to the same network that a mobile device is connected to, equipment in the network can be used by the same method as described below. Now, referring to Figures 19 to 23B, the communication method according to the second embodiment will be described.

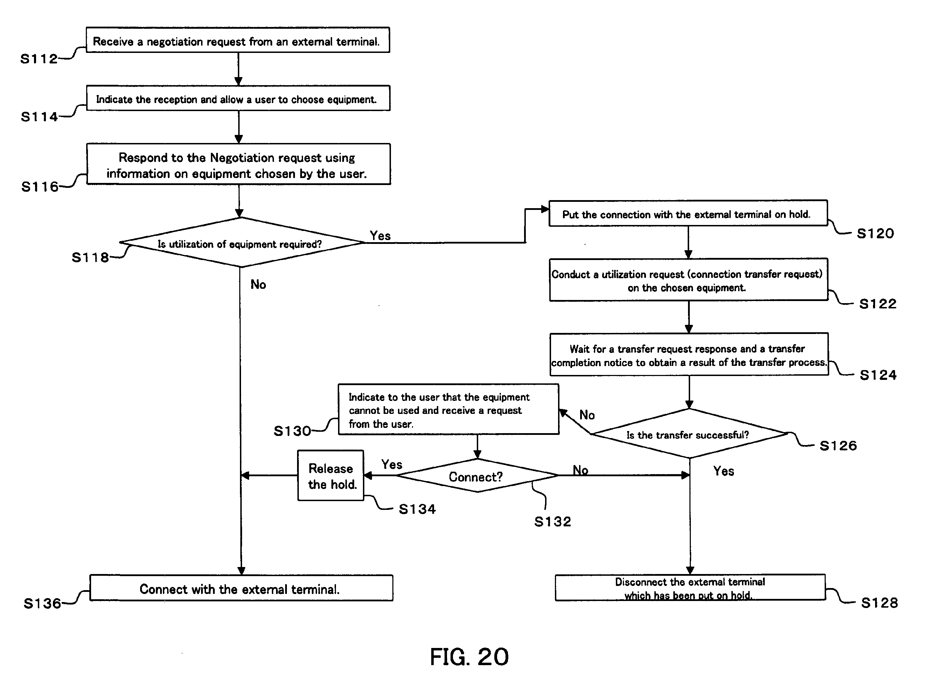

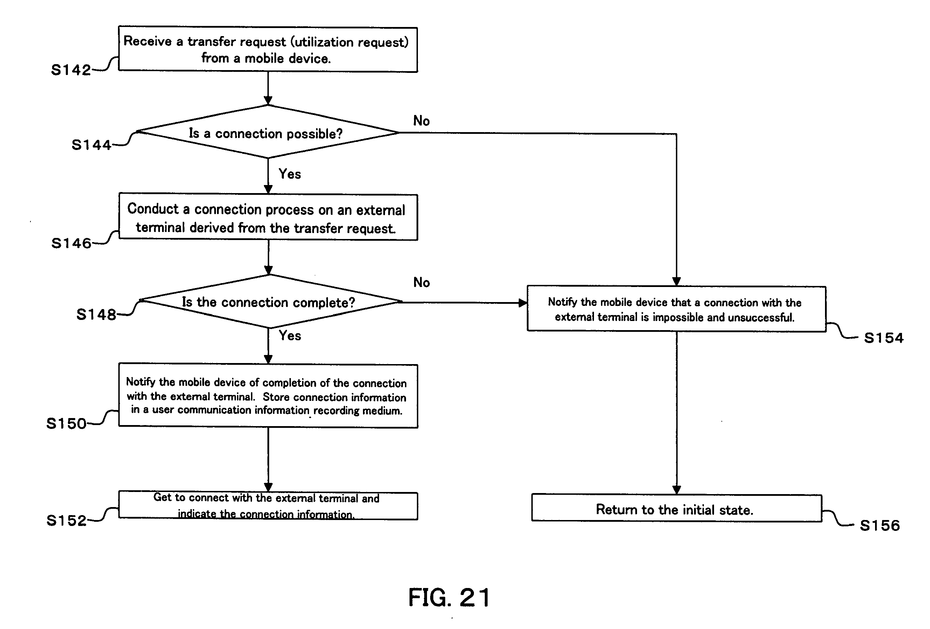

Figure 19 shows a sequence of sending and receiving data between each component in the communication method according to the second embodiment, Figure 20 is a flowchart showing a connection process in the mobile device 120 (S110), and Figure 21 is a flowchart showing a transfer process in the PC terminal 112 (S140). The sequence of sending and receiving data between each of the external terminal 701, the mobile device 120, and the PC terminal 112 will be described first with reference to Figure 19, and the processes in the mobile device 120 and the PC terminal 112 will be described later.

At the outset, the external terminal 701 outside the local IP network 111 sends a negotiation request to the mobile device 120. The negotiation request to be sent here is a SIP INVITE command and includes communication information that communication relating to the negotiation request is multimedia communication. Upon receiving the negotiation request, the mobile device 120 sends a negotiation request response to the external terminal 701. The negotiation request response to be sent here is a SIP 200 OK indicating an acknowledgment. The external terminal 701, upon receiving the negotiation request response, then sends a negotiation request acknowledgment (ACK) to the mobile device 120. The sequence conducted so far establishes a connection between the external terminal 701 and the mobile device 120.

The mobile device 120 then sends a hold request to the external terminal 701. The hold request to be sent here is a SIP INVITE command. Upon receiving the hold request, the external terminal 701 sends a hold request response (200 OK) to the mobile device 120, which in response to this sends a hold request acknowledgment (ACK). This sequence puts the connection between the external terminal 701 and the mobile device 120 on hold.

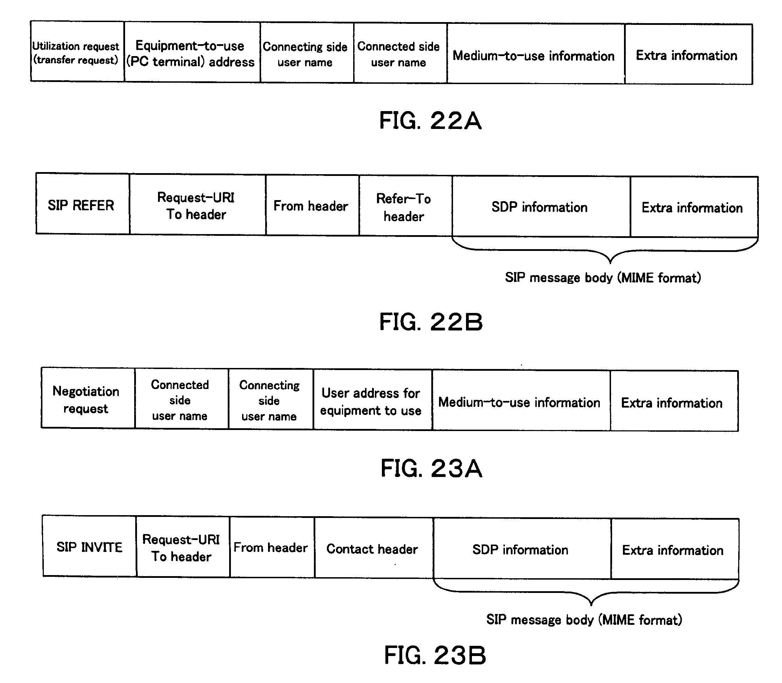

Next, in the state of the connection between the mobile device 120 and the external terminal 701 being put on hold, the mobile device 120 sends a connection transfer request to the PC terminal 112. The transfer request to be sent here is a SIP REFER command. Figure 22A shows a data structure of a transfer request, and Figure 22B shows the SIP message format adhered to by a transfer request. As shown in Figures 22A and 22B, a transfer request has a REFER command, which is followed by an address of equipment to be used, i.e. the PC terminal 112, as Request-URI/To header, a user name of the connecting side (the mobile device 120) as a From header, and a user name of the connected side (the external terminal 701) as a Refer-To header, and has medium-to-use information in a message body. Upon receiving the transfer request sent from the mobile device 120, the PC terminal 112 sends a transfer request response (200 OK) to the mobile device 120.

The PC terminal 112 then conducts a process for connecting with the external terminal 701 based on information obtained from a transfer request (Figure 22A). The PC terminal 112 sends a negotiation request to the external terminal 701. The negotiation request to be sent here is a SIP INVITE command. Figure 23A shows a data structure of a negotiation request, and Figure 23B shows the SIP message format adhered to by a negotiation request. As shown in Figures 23A and 23B, a negotiation request has an INVITE command, which is followed by an address of the connected side, i.e. the external terminal 701, as Request-URI/To header, a user name of the connecting side, i.e. the mobile device 120, as a From header, an address of the PC terminal 112 as a Contact header, and has medium-to-use information in a message body. Upon receiving this negotiation request, the external terminal 701 sends a negotiation request response (200 OK) to the PC terminal 112, which in response to this sends a negotiation request acknowledgment (ACK) to the external terminal 701, and thus a connection between the PC terminal 112 and the external terminal 701 is established.

Upon establishment of the connection between the PC terminal 112 and the external terminal 701, the PC terminal 112 sends a transfer completion notice to the mobile device 120. The transfer completion notice to be sent here is a SIP NOTIFY command. Upon receiving the transfer completion notice, the mobile device 120 sends a transfer completion response (200 OK) to the PC terminal 112. In this way, multimedia communication between the external terminal 701 and the PC terminal 112 is carried out.

Upon establishment of the connection between the external terminal 701 and the PC terminal 112, the mobile device 120 sends a disconnection request to the external terminal 701.

The disconnection request to be sent here is a SIP BYE command. The external terminal 701 upon receiving the disconnection request sends a disconnection request response (200 OK) to the mobile device 120, and thus the connection between the mobile device 120 and the external terminal 701 put on hold is disconnected.

Next, the connection process in the mobile device 120 (S110) to realize the sequence shown in Figure 19 will be described with reference to Figure 20. At the outset, the mobile device 120 receives by means of the signaling control section 206 a negotiation request sent from the external terminal 701 (S112). The mobile device 120 in response to the negotiation request sends a negotiation request response and receives a negotiation request acknowledgment of that, and thus a connection with the external terminal 701 is established here.

The mobile device 120 then makes the communication information indication section 204 indicate that a negotiation request is received, indicates available equipment, and makes the user request input section 208 allow a user to choose which piece of equipment should process the negotiation request (S114). The user may use a piece of the indicated equipment as equipment to be used for a connection, or need not choose other equipment (may choose "no equipment utilization") if communication between the mobile device 120 and the external terminal 701 can be carried out properly. In the embodiment, communication according to the negotiation request is multimedia communication which cannot be handled by the mobile device 120, and the user chooses the PC terminal 112 as equipment to be used.

Upon input from the user, the mobile device 120 analyzes the inputted request by means of the user request analysis section 203 and responds to the negotiation request using the chosen equipment information (S116). The mobile device 120 judges whether utilization of equipment connected to the local IP network 111 is required or not (S118). If utilization of equipment is not required, the mobile device 120 connects with the external terminal 701. If utilization of equipment is required, it puts the connection with the external terminal 701 on hold (S120). That is, the mobile device 120 can put the connection with the external terminal 701 on hold by sending a hold request to the external terminal 701 and receiving a hold request response sent from the external terminal 701.

After the connection with the external terminal 701 is put on hold, the mobile device 120 sends a transfer request to the PC terminal 112 by means of the signaling control section 206 (S122). Explaining the transfer request (Figure 22A) to be sent here, an equipment-to-use address to be described in the Request-URI/To header and medium-to-use information to be described in the message body are obtained from the available equipment information recording medium 207 based on the user's equipment choice information. A connecting user name is obtained by means of the user information obtaining section 202. A connected user name is obtained by means of the general control section 205, and the external terminal 701 is designated for it.

After sending the transfer request, the mobile device 120 waits for the PC terminal 112 to send a transfer request response (S124), and judges whether the transfer is successful or not based on the received transfer request response (S126). When judged at the judgment step (S126) that the transfer is successful, multimedia communication is carried out between the PC terminal 112 and the external terminal 701. At this time, the mobile device 120 disconnects the connection with the external terminal 701 which has been put on hold (S128).

When judged at the judgment step S126 that the transfer is unsuccessful, the mobile device 120 indicates on the communication information indication section 204 that equipment could not be used, and waits for a request from the user (S130). Upon input of a request from the user, the mobile device 120 analyzes the inputted request by means of the user request analysis section 203 and judges whether a negotiation request has been inputted or not (S132). When judged here that a negotiation request has been inputted, the mobile device 120 releases the external terminal 701 from hold and connects with the external terminal 701 (S134). Conversely, when judged that a negotiation request has not been inputted, the mobile device 120 releases the external terminal 701 from hold and disconnects the external terminal 701 (S128).

A process in the PC terminal 112 (S140) upon receiving a transfer request sent from the mobile device 120 (Figure 22A) will be described next with reference to Figure 21. Upon receiving by means of the signaling control section 306 a negotiation request sent from the mobile device (S142), the PC terminal 112 judges whether a connection with the external terminal 701 is possible or not by means of the general control section 305 (S144). When judged here that a connection with the external terminal 701 is impossible, the PC terminal 112 sends to the mobile device 120 the information that a connection with the external terminal 701 is unsuccessful (S154), and changes to its initial state (S156). When judged by the general control section 305 that a connection with the external terminal 701 is possible, the PC terminal 112 conducts a process for connecting with the external terminal 701 (S146). The PC terminal 112 then judges whether the connection is complete or not (S148). When judged that the connection is complete, the PC terminal 112 sends to the mobile device 120 as a transfer request response the information that the connection with the external terminal 701 is complete (S150) and connects with the external terminal 701 to indicate connection information (S152). When judged that the connection is not complete, the PC terminal 112 sends to the mobile device 120 the information that the connection with the external terminal 701 is unsuccessful (S154), and changes to its initial state (S156).

In the communication method according to the second embodiment of the invention, the mobile device 120 upon receiving a negotiation request sent from the external terminal 701 can transfer the negotiation request, based on a user's choice, to the PC terminal 112 connected to the local IP network 111 to have the PC terminal 112 communicate with the external terminal 701. In addition, since equipment to be chosen by a user is equipment recorded on the available equipment information recording medium 207, there is no need for a sequence to check whether chosen equipment is available or not, and therefore connection delays can be reduced.

In the embodiment, equipment to be used for a communication connection is chosen by a user at the step S114. However, the mobile device 120, based on the equipment medium information 1404 recorded on the available equipment information recording medium 207, may automatically select equipment capable of handling a communication relating to a negotiation request and may transfer the negotiation request to the selected equipment. This allows a smooth connection omitting the step of choosing equipment and realizes a user-friendly configuration.

### (Third Embodiment)

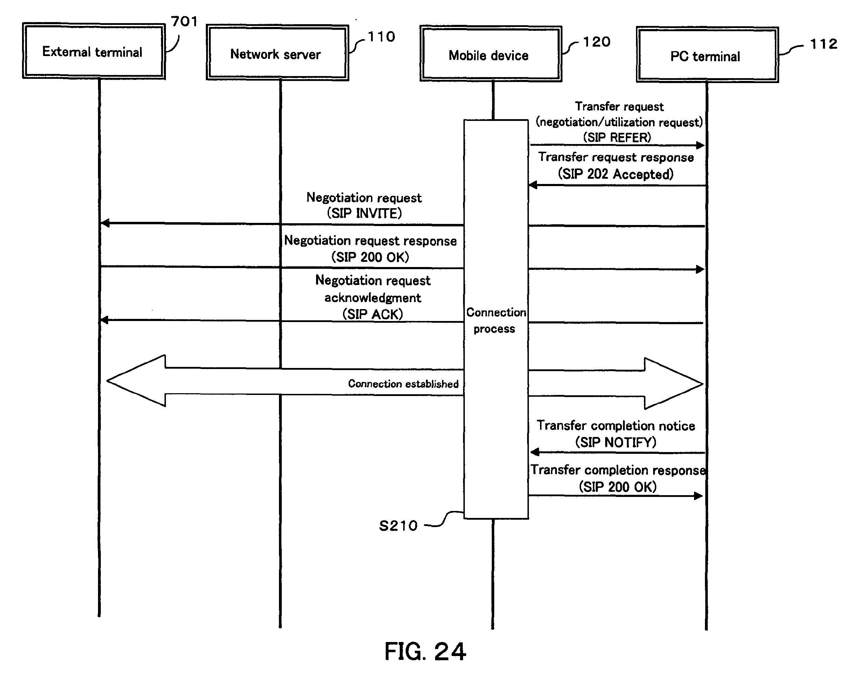

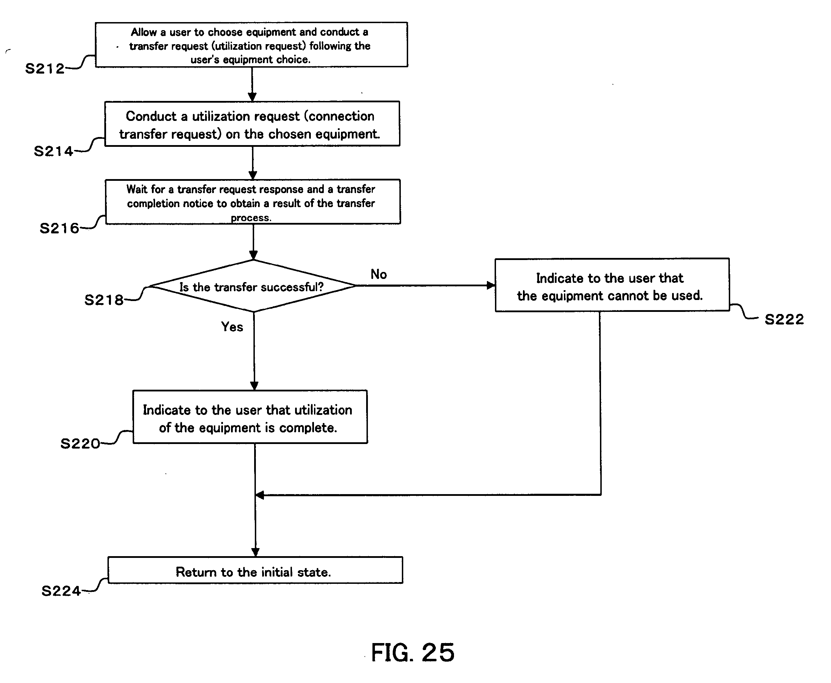

A communication method according to a third embodiment of the invention will now be described. The communication method according to the third embodiment of the invention is a communication method for carrying out multimedia communication with the external terminal 701 outside a network using the PC terminal 112 connected to the local IP network 111. In contrast to the above-described communication method according to the second embodiment in which multimedia communication is carried out in response to a negotiation request from the external terminal 701, the mobile device 120 starts multimedia communication with the external terminal 701 in the communication method according to the third embodiment. Now, the communication method according to the third embodiment will be described with reference to Figures 24 and 25.

Figure 24 shows a sequence of sending and receiving data between each component in the communication method according to the third embodiment, and Figure 25 is a flowchart showing a connection process in the mobile device 120. The sequence of sending and receiving data between each of the external terminal 701, the mobile device 120, and the PC terminal 112 will be described first with reference to Figure 24, and the processes in the mobile device 120 and the PC terminal 112 will be described later.

At the outset, the mobile device 120 sends a connection transfer request to the PC terminal 112. The transfer request to be sent here is a SIP REFER command. Upon receiving the transfer request sent from the mobile device 120, the PC terminal 112 sends a transfer request response to the mobile device 120. The transfer request response to be sent here is a SIP 202 Accepted.

The PC terminal 112 then sends a negotiation request to the external terminal 701 based on the transfer request received from the mobile device 120. The negotiation request to be sent here is a SIP INVITE command. Upon receiving the negotiation request sent from the PC terminal 112, the external terminal 701 sends a negotiation request response (200 OK) to the PC terminal 112, which sends a negotiation request acknowledgment (ACK) to the external terminal 701, and thus a connection between the PC terminal 112 and the external terminal 701 is established. Upon establishment of the connection with the external terminal 701, the PC terminal 112 sends a transfer completion notice to the mobile device 120. The transfer completion notice to be sent here is a SIP NOTIFY command. Upon receiving the transfer completion notice, the mobile device 120 sends a transfer completion response (200 OK) to the PC terminal 112. The above sequence allows the mobile device 120 to carry out multimedia communication using the PC terminal 112.

Next, the process in the mobile device 120 will be described with reference to Figure 25. At the outset, the mobile device 120 indicates information on available equipment based on information stored in the available equipment information recording medium 207 and allows a user to choose equipment to be used for multimedia communication (S212). The mobile device 120 then analyzes an input by the user by means of the user request analysis section 203 and sends a connection transfer request to the chosen equipment (S214). The PC terminal 112 is chosen by the user here.

After sending the connection transfer request, the mobile device 120 waits for a transfer request response and transfer completion notice to be sent from the PC terminal 112 (S216), and judges whether the transfer is complete or not when receiving a transfer completion notice (S218).

When judged here that the transfer is successful, the mobile device 120 indicates on the communication information indication section 204 that the PC terminal 112 could be used (S220). When judged that the transfer is unsuccessful, the mobile device 120 indicates on the communication information indication section 204 that the PC terminal 112 could not be used (S222). In either case, the mobile device 120 changes to its initial state (S224).

In the communication method according to the third embodiment of the invention, the mobile device 120 can send a connection transfer request to the PC terminal 112 based on a user's choice to start communication with the external terminal 701 by means of the PC terminal 112. In addition, since equipment to be chosen by a user is equipment recorded on the available equipment information recording medium 207, it has been made sure in advance that chosen equipment is available to the user. So, there is no need to conduct such a check every time equipment is chosen, and therefore connection delays can be reduced.

### (Fourth Embodiment)

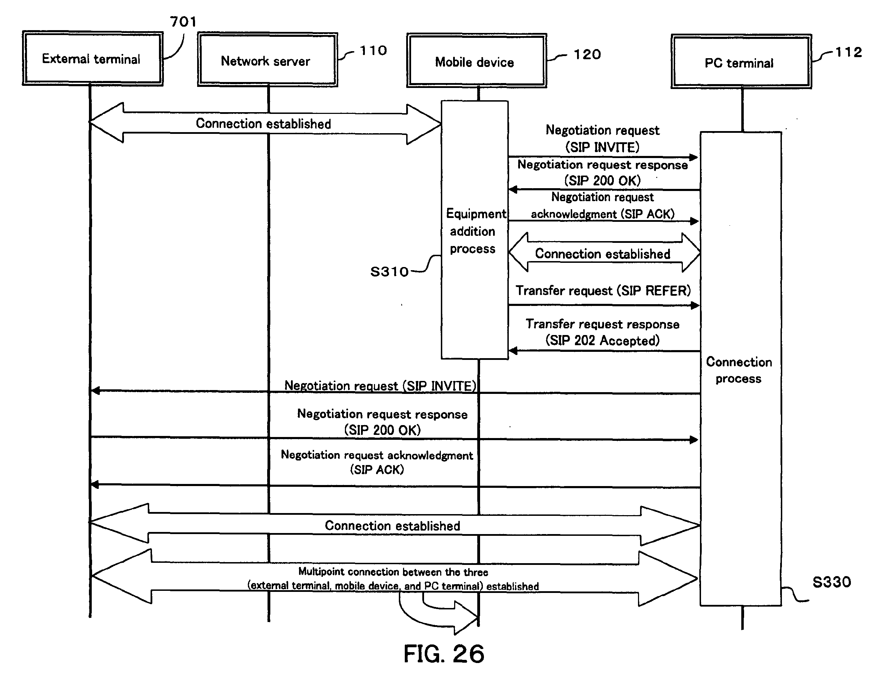

A communication method according to a fourth embodiment of the invention will now be described. The communication method according to the fourth embodiment of the invention is a communication method for communicating between the three of the mobile device 120, the PC terminal 112, and the external terminal 701 outside a network using the PC terminal 112 connected to the local IP network 111. Now, the communication method according to the fourth embodiment will be described with reference to Figures 26 to 30B.

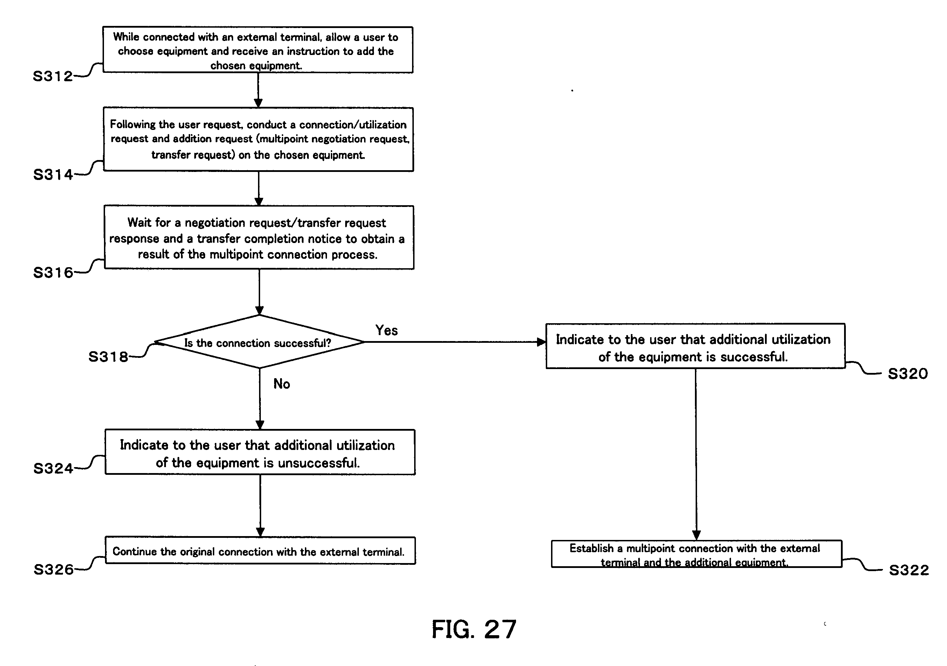

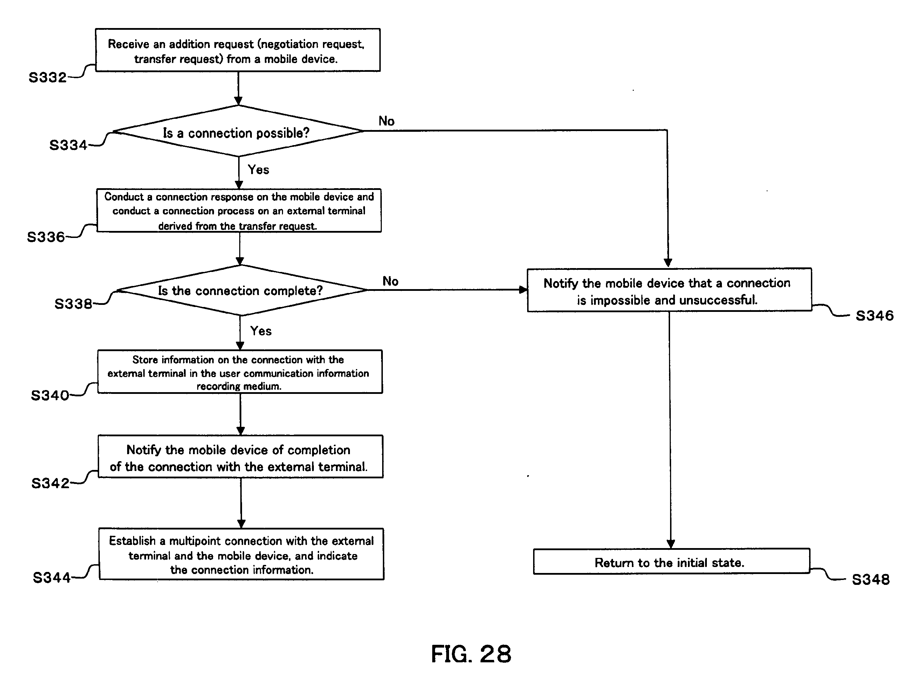

Figure 26 shows a sequence of sending and receiving data between each component in the communication method according to the fourth embodiment, Figure 27 is a flowchart showing an equipment addition process in the mobile device 120 (S310), and Figure 28 is a flowchart showing a connection process in the PC terminal 112 (S340). The sequence of sending and receiving data between each of the external terminal 701, the mobile device 120, and the PC terminal 112 will be described first with reference to Figure 26, and the processes in the mobile device 120 and the PC terminal 112 will be described later.

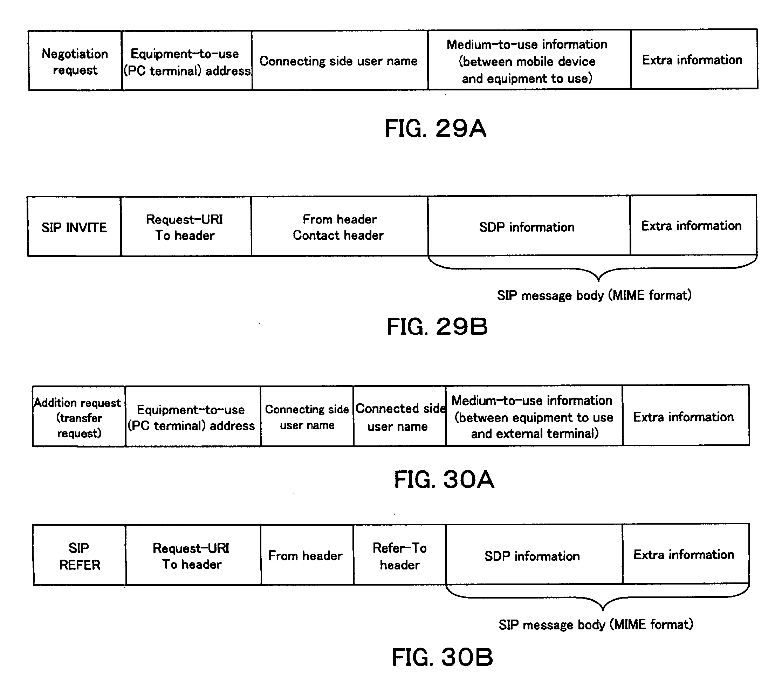

At the outset, in a state where a connection between the mobile device 120 and the external terminal 701 is established, the mobile device 120 sends a negotiation request to the PC terminal 112. The negotiation request to be sent here is a SIP INVITE command. Figure 29A shows a data structure of a negotiation request, and Figure 29B shows the SIP message format adhered to by a negotiation request. As shown in Figures 29A and 29B, a negotiation request has an INVITE command, which is followed by an address of equipment to be used, i.e. the PC terminal 112, as Request-URI/To header and a user name of the connecting side as From header/Contact header, and has medium-to-use information in a message body. Upon receiving this negotiation request, the PC terminal 112 sends a negotiation request response (200 OK) to the mobile device 120, which upon receiving the negotiation request response sends a negotiation request acknowledgment (ACK) to the PC terminal 112, and thus a connection between the mobile device 120 and the PC terminal 112 is established.

The mobile device 120 then sends to the PC terminal 112 a transfer request for connecting the PC terminal 112 with the external terminal 701. The transfer request to be sent here is a SIP REFER command. Figure 30A shows a data structure of a transfer request, and Figure 30B shows the SIP message format adhered to by a transfer request. As shown in Figures 30A and 30B, a transfer request has a REFER command, which is followed by an address of equipment to be used, i.e. the PC terminal 112, as Request-URI/To header, a user name of the connecting side, i.e. the mobile device 120, as a From header, and a connected side user name, i.e. a user name of the external terminal 701, as a Refer-To header, and has medium-to-use information in a message body. Upon receiving this transfer request, the PC terminal 112 sends a transfer request response (202 Accepted) to the mobile device 120.

Based on the received transfer request (Figure 30A), the PC terminal 112 then sends a negotiation request to the external terminal 701. The negotiation request to be sent here is a SIP INVITE command. Upon receiving the negotiation request, the external terminal 701 sends a negotiation request response (200 OK) to the PC terminal 112, which upon receiving this sends a negotiation request acknowledgment (ACK) to the external terminal 701, and thus a connection between the external terminal 701 and the PC terminal 112 is established. This allows a multipoint communication between the three of the mobile device 120, the PC terminal 112, and the external terminal 701.

The equipment addition process in the mobile device 120 (S310) will be described next with reference to Figure 27. While connected with the external terminal 701, the mobile device 120 indicates information on available equipment based on equipment information recorded on the available equipment information recording medium 207 and allows a user to choose equipment to be used (S312). The PC terminal 112 is chosen here as equipment to be used. The mobile device 120 then sends to the PC terminal 112 a negotiation request for a multipoint connection by means of the signaling control section 206 (S314). That is, the mobile device 120 sends to the PC terminal 112 a request for connection between the mobile device 120 and the PC terminal 112 (Figure 29A) and a transfer request for connection between the PC terminal 112 and the external terminal 701 (Figure 30A). Explaining the negotiation request and transfer request to be sent here, as to the negotiation request, an equipment-to-use address to be described in Request-URI/To header and medium-to-use information to be described in a message body are obtained from the available equipment information recording medium 207, and a connecting user name to be described in From header/Contact header is obtained by means of the user information obtaining section 202; while as to the transfer request, an equipment-to-use address to be described in Request-URI/To header and medium-to-use information described in a message body are obtained from the available equipment information recording medium 207, and a connecting user name to be described in a From header is obtained by means of the user information obtaining section. A connected user name to be described in a Refer-To header is obtained by means of the general control section 205, and the external terminal 701 is designated for it.

After sending the negotiation request and transfer request for a multipoint connection, the mobile device 120 receives results of the connection processes sent from the PC terminal 112 (S316) and judges whether the connection processes are successful or not based on the received results of the processes (S318). When judged here that the connection processes are successful, the mobile device 120 indicates on the communication information indication section 204 that utilization of equipment is successful (S320). In this way, the mobile device 120 completes a multipoint connection with the external terminal 701 and the PC terminal 112 (S322). When judged based on the received results of processes that the connection processes are unsuccessful, the mobile device 120 indicates on the communication information indication section 204 that utilization of equipment is unsuccessful (S324), and continues the connection with the external terminal 701 (S326).

The process in the PC terminal 112 will be described next with reference to Figure 28. Upon receiving an addition request (a negotiation request and a transfer request) sent from the mobile device 120 by means of the signaling control section 306 (S332), the PC terminal 112 judges whether the additional connection is possible or not by means of the general control section 305 (S334). When judged here that a connection is impossible, the PC terminal 112 notifies the mobile device 120 of connection failure by means of the signaling control section 306 (S346), and changes to its initial state (S348).

When judged at the judgment step S334 that an additional connection is possible, the PC terminal 112 sends a connection response to the mobile device 120 and conducts a process for connecting with the external terminal 701 based on information obtained from the transfer request (S336). That is, the PC terminal 112 sends a negotiation request to the external terminal 701. The PC terminal 112 then judges whether the connection with the external terminal 701 is complete or not (S338). When judged that the connection is complete, the PC terminal 112 records information about the connection with the external terminal 701 on the user information recording medium 102 (S340). The PC terminal 112 then notifies the mobile device 120 of completion of the connection with the external terminal 701 (S342), gets into a multipoint connection with the external terminal 701 and the mobile device 120, and indicates connection information on the communication information indication section 304 (S344). When judged at the judgment step S338 that a connection is unsuccessful, the PC terminal 112 notifies the mobile device 120 of connection failure by means of the signaling control section 306 (S346), and changes to its initial state (S348).

In the communication method according to the fourth embodiment of the invention, a request for a connection with the PC terminal 112 and a transfer request for a connection between the PC terminal 112 and the external terminal 701 can be sent from the mobile device 120 to the PC terminal 112 based on a user's choice, and multipoint communication between the three of the mobile device 120, the PC terminal 112, and the external terminal 701 can be carried out. Though this is called multipoint communication, its actual form is that the mobile device 120 handles one part of media included in communication with the external terminal 701 and the PC terminal 112 handles another part; and a user of the mobile device 120 performs input and output on both of the mobile device 120 and the PC terminal 112 on the spot. In addition, since equipment to be chosen by a user is equipment recorded on the available equipment information recording medium 207, it has been made sure in advance that chosen equipment is available to the user. So, there is no need to conduct such a check every time equipment is chosen, and therefore connection delays can be reduced.

In the embodiment, the mobile device 120 communicating with the external terminal 701 sends a negotiation request to the PC terminal 112 and further sends to the PC terminal 112 a negotiation request for establishing a connection between the PC terminal 112 and the external terminal 701. However, another method may be used to connect the three of the mobile device 120, the external terminal 701, and equipment in a network. For example, a server to manage a multipoint connection is provided. As such a server, there is, for example, a multipoint conference server which realizes a multipoint conference. This multipoint conference server has functions as follows: 1) two-party connection with a terminal which participates in a multipoint conference; 2) connection between terminals which participate in a multipoint conference; 3) mixing (composition) of conference use media; 4) sending and receiving conference use media; 5) management and notice of information on a conference (information on participants etc.); and the like.

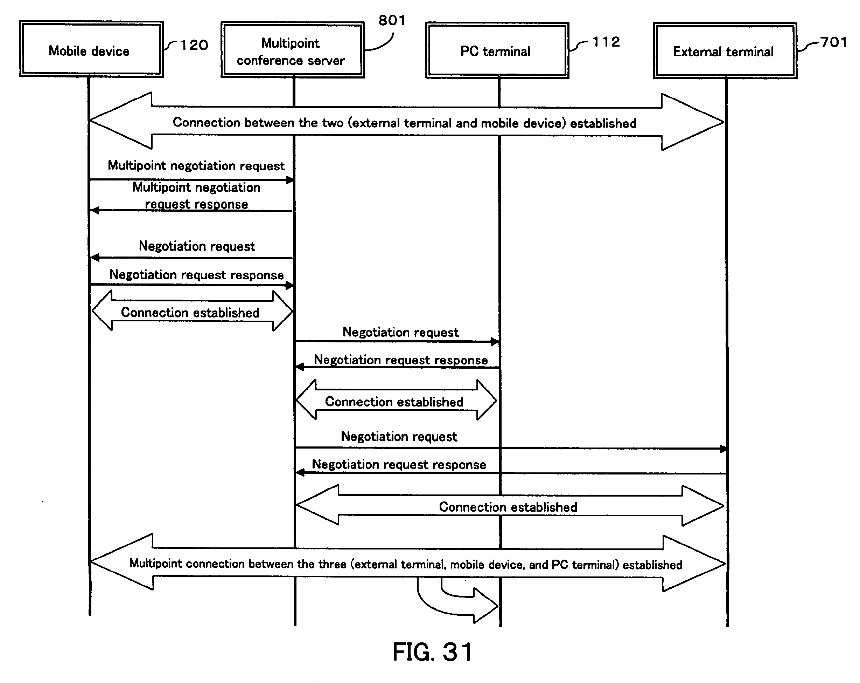

A multipoint conference server like this allows the mobile device 120 to send a negotiation request to the multipoint conference server for connection between the three of the mobile device 120, chosen equipment (the PC terminal 112), and the external terminal 701. A connection method using a multipoint conference server will be described next with reference to Figure 31.

The following is a description about a case, as is the case with the above embodiment, where a three-party multipoint connection is to be made by adding other equipment to communication in a state where a connection between the mobile device 120 and the external terminal 701 is established. Additional equipment is chosen by a user here as is the case with the above embodiment. Once additional equipment is chosen, the mobile device 120 sends a multipoint negotiation request to a multipoint conference server 801. This multipoint negotiation request includes information on equipment and terminal to be multipoint-connected with the mobile device 120. Included here as information on equipment and terminal to be connected are information on equipment chosen by a user (the PC terminal 112) and the external terminal 701 connected in advance.

Upon receiving a multipoint negotiation request sent from the mobile device 120, the multipoint conference server 801 sends a multipoint negotiation request response to the mobile device 120. The multipoint negotiation request sent from the mobile device 120 is thus accepted by the multipoint conference server 801. The multipoint conference server 801 then sends a negotiation request to the mobile device 120. Upon receiving a negotiation request sent from the multipoint conference server 801, the potable device 120 sends a negotiation request response to the multipoint conference server 801. A connection between the multipoint conference server 801 and the mobile device 120 is thus established. The multipoint conference server 801 then sends a negotiation request to the PC terminal 112 based on a negotiation request from the mobile device 120. Upon receiving a negotiation request from the multipoint conference server 801, the PC terminal 112 sends a negotiation request response to the multipoint conference server 801. A connection between the multipoint conference server 801 and the PC terminal 112 is thus established. Likewise, the multipoint conference server 801 sends a negotiation request to the external terminal 701 based on a negotiation request from the mobile device 120. Upon receiving a negotiation request from the multipoint conference server 801, the external terminal 701 sends a negotiation request response to the multipoint conference server 801. A connection between the multipoint conference server 801 and the external terminal 701 is thus established.

As a result of the above flow, a multipoint connection between the three of the mobile device 120, the PC terminal 112, and the external terminal 701 is established. Once the three-party connection is established, the two-party connection between the mobile device 120 and the external terminal 701, which has been established in the first place, is disconnected. In this way, the connection is changed to a three-party connection. Incidentally, the multipoint conference server 801 can connect a larger number of conference participant terminals beyond a three-party multipoint connection.

### (Fifth Embodiment)

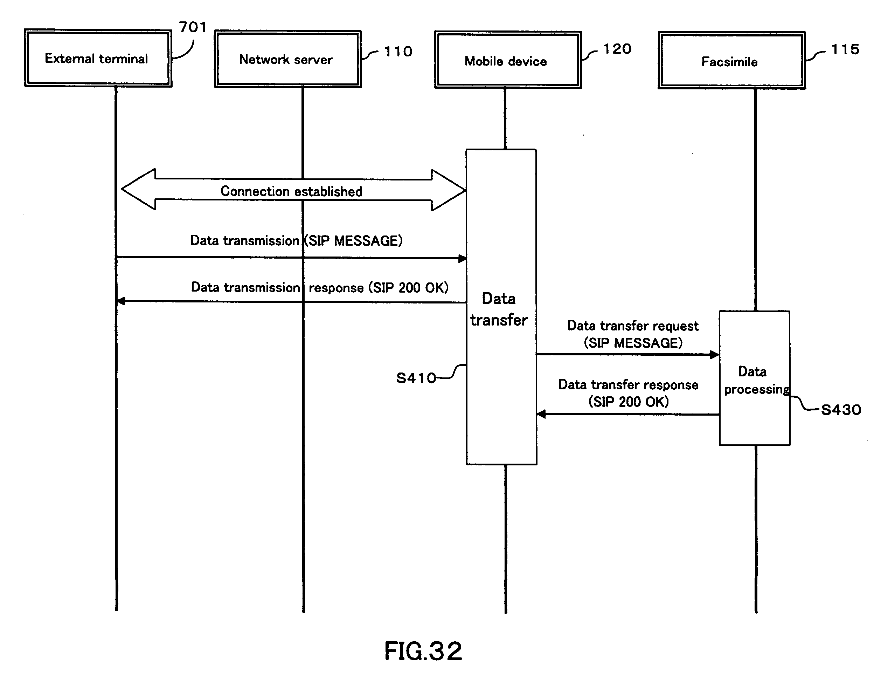

A communication method according to a fifth embodiment of the invention will be described next. The communication method according to the fifth embodiment of the invention is a communication method in which the mobile device 120 processes received data using the facsimile 115 connected to the local IP network 111. The communication method according to the fifth embodiment will now be described with reference to Figures 32 to 36B.

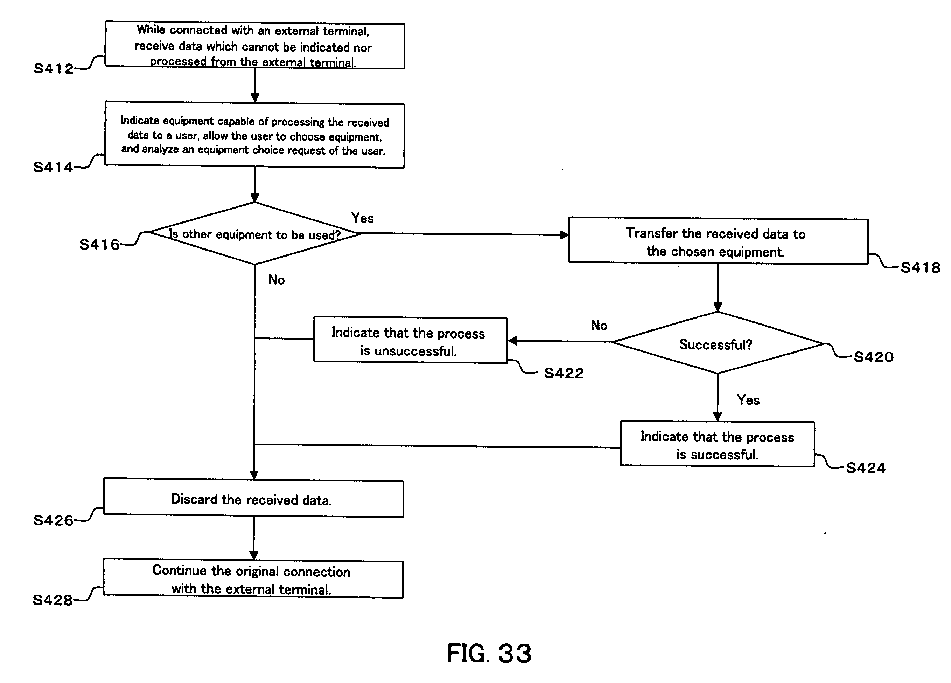

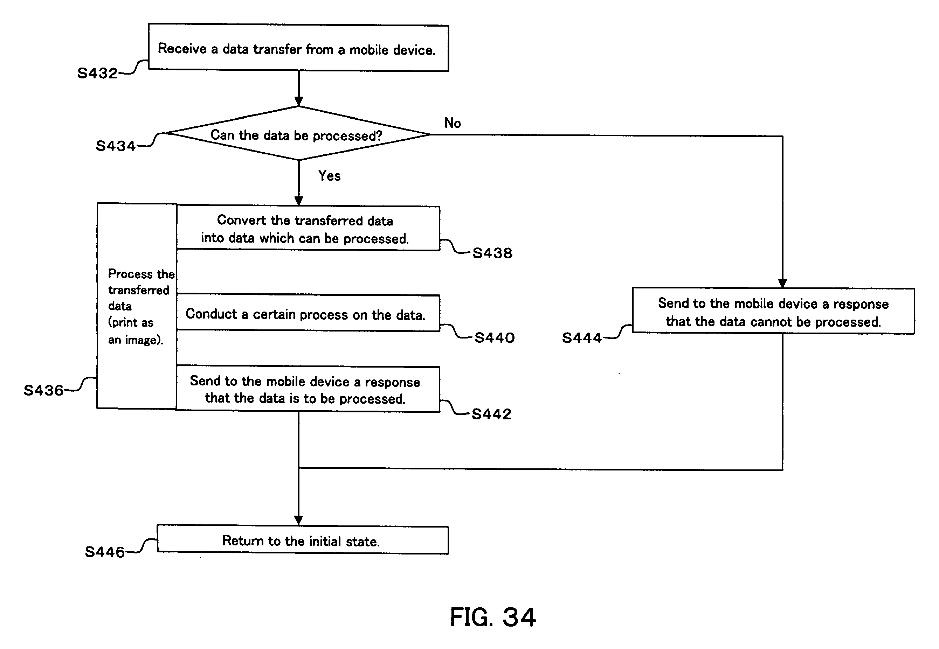

Figure 32 shows a sequence of sending and receiving data between each component in the communication method according to the fifth embodiment, Figure 33 is a flowchart showing a transfer process in the mobile device 120 (S410), and Figure 34 is a flowchart showing a data processing in the facsimile 115 (S430). The sequence of sending and receiving data between each of the external terminal 701, the mobile device 120, and the facsimile 115 will be described first with reference to Figure 32, and the processes in the mobile device 120 and the facsimile 115 will be described later.

At the outset, in a state where a connection between the mobile device 120 and the external terminal 701 is established, a data transmission is conducted from the external terminal 701 to the mobile device 120. The data to be sent here is transmitted by a SIP MESSAGE command.

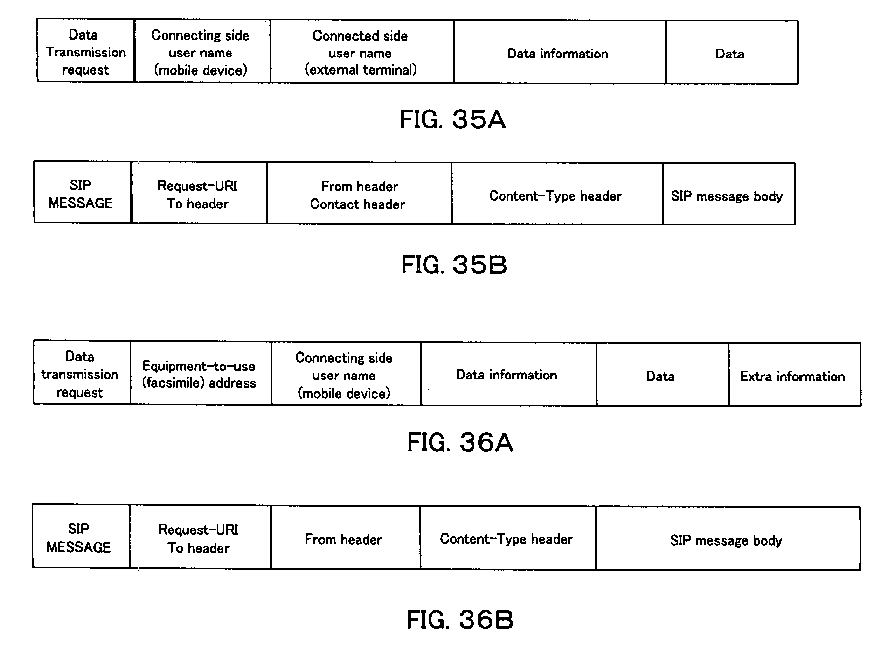

Figure 35A shows a data structure of a data transmission request, and Figure 35B shows the SIP message format adhered to by a data transmission request. As shown in Figures 35A and 35B, a data transmission request has a MESSAGE command, which is followed by an address of the connecting side, i.e. the mobile device 120, as Request-URI/To header, a user name of the connected side, i.e. the external terminal 701, as From header/Contact header, and data information in a Content-Type header, and has data in a message body. Upon receiving this data transmission request, the mobile device 120 sends a data transmission response (200 OK) to the external terminal 701.

The mobile device 120 then transmits data to the facsimile 115. The data to be sent here is transmitted by a SIP MESSAGE command. Figure 36A shows a data structure of a data transfer request, and Figure36B is the SIP message format adhered to by a data transfer request. As shown in Figures 36A and 36B, a data transfer request has a MESSAGE command, which is followed by an address of equipment to be used, i.e. the facsimile 115, as Request-URI/To header, a user name of the connecting side, i.e. the mobile device 120, as a From header, and data information in a Content-Type header, and has data in a message body. This data information and data are data information and data included in a data transfer request sent from the external terminal 701. Upon receiving this data transfer request, the facsimile 115 sends a data transfer response (200 OK) to the mobile device 120. A sequence like this allows the mobile device 120 to, upon receiving data which cannot be processed, transfer the data to the facsimile 115 to have the facsimile 115 process it. Incidentally, though a case where communication between the mobile device 120 and the facsimile 115 is carried out by the SIP is described here, a protocol other than the SIP can be used between the mobile device 120 and the facsimile 115 if the mobile device 120 has enough memory.

The transfer process in the mobile device 120 (S410) will be described next with reference to Figure 33. The mobile device 120 receives by means of the signaling control section 206 data which is sent from the external terminal 701 and cannot be indicated nor processed (S412). The mobile device 120 selects from the available equipment information recording medium 207 equipment capable of processing the received data, indicates them on the communication information indication section 204, and allows a user to choose equipment to process the received data. The mobile device 120 then analyzes a request inputted by the user by means of the user request analysis section 203 (S414).

The mobile device 120 judges whether utilization of other equipment has been chosen by the user's input or not (S416). When judged as a result that other equipment is to be used, the mobile device 120 transfers the received data to the chosen equipment (S418). In this example, the received data is facsimile data, and the facsimile 115 is chosen as other equipment. The mobile device 120 judges whether the transfer of the received data is successful or not (S420), indicates on the communication information indication section 204 that the process is successful when judged that the transfer is successful (S424), and indicates that the process is unsuccessful when judged that the transfer is unsuccessful (S422). In either case, the mobile device 120 discards the received data (S426), and continues the connection with the external terminal 701 (S428).

On the other hand, when judged at the step S416 that other equipment is not to be used, the mobile device 120 discards the received data by means of the general control section 205 (S426), and continues the connection with the external terminal 701 (S428).

The process in the facsimile 115 to which received data is transferred will be described next with reference to Figure 34. The facsimile 115 receives by means of the signaling control section 407 data transferred from the mobile device 120 **(S432)** and judges whether the received data can be processed or not by means of the general control section 406 (S434). When judged as a result of the judgment that the data can be processed, the facsimile 115 processes the transferred data and prints it as an image (S436). Specifically, the transferred data is converted by means of the data processing section 405 into data which can be processed (S438), and a certain process is conducted on the data (S440). The facsimile 115 then sends a response concerning the process to the mobile device 120 by means of the signaling control section 407 (S442). After processing the transferred data, the facsimile 115 changes to its initial state (S446).

On the other hand, when judged as a result of the judgment at the step S434 that the received data cannot be processed, the facsimile 115 sends to the mobile device 120 by means of the signaling control section 407 a response that the data cannot be processed (S444), and changes to its initial state (S446).

In the communication method according to the fifth embodiment of the invention, the mobile device 120, upon receiving data which it cannot process, can transfer the data from the mobile device 120 to the facsimile 115 to have the facsimile 115 process the data. In addition, since equipment to be indicated as equipment capable of processing data (another facsimile, printer, etc.) is equipment recorded on the available equipment information recording medium 207, it has been made sure in advance that chosen equipment is available to the user. So, there is no need to conduct such a check every time equipment is chosen, and therefore connection delays can be reduced.

In the embodiment, equipment to be used for a data processing is chosen by a user at the step S414. However, the mobile device 120, based on the equipment medium information 1404 recorded on the available equipment information recording medium 207, may automatically select equipment capable of processing data and may transfer the data to the selected equipment. This allows a smooth data processing omitting the step of choosing equipment and also realizes a user-friendly configuration.

### (Sixth Embodiment)

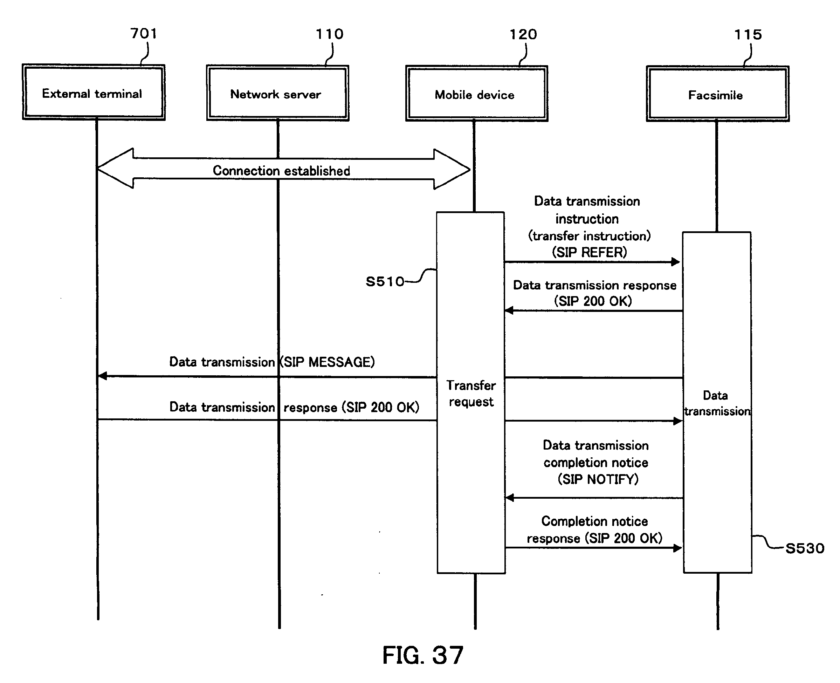

A communication method according to a sixth embodiment of the invention will be described next. The communication method according to the sixth embodiment of the invention is a communication method for sending data which cannot be indicated nor processed by the mobile device 120 to the external terminal 701 outside a network. Now, the communication method according to the sixth embodiment will be described with reference to Figures 37 to 41B.

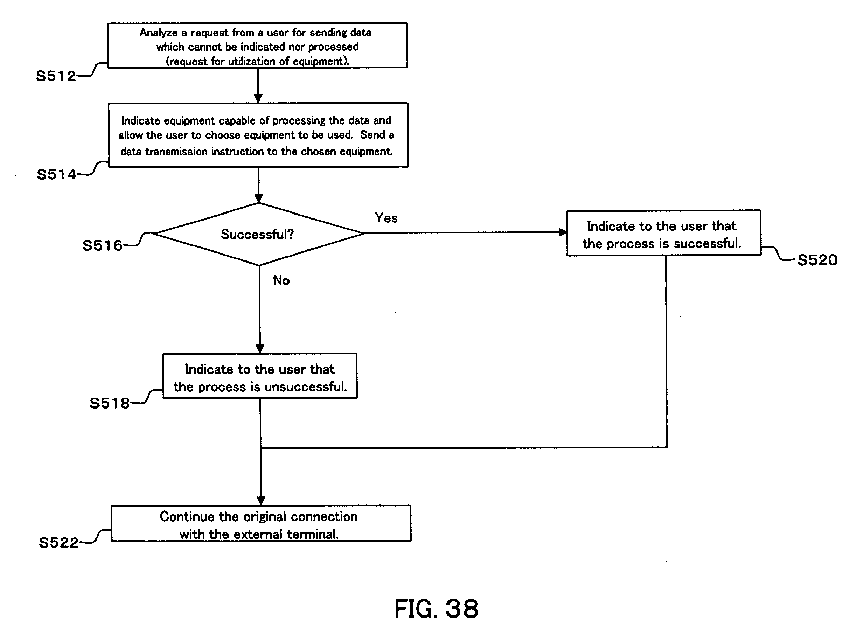

Figure 37 shows a sequence of sending and receiving data between each component in the communication method according to the sixth embodiment, Figure 38 is a flowchart showing a connection process in the mobile device 120, and

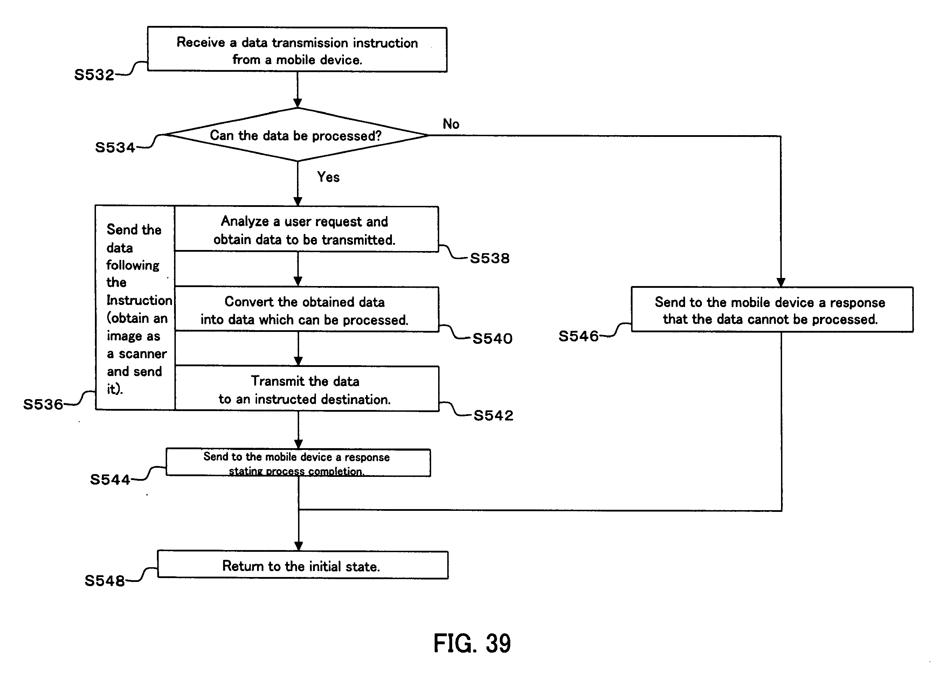

Figure 39 is a flowchart showing a process in the facsimile 115. The sequence of sending and receiving data between each of the external terminal 701, the mobile device 120, and the facsimile 115 will be described first with reference to Figure 37, and the processes in the mobile device 120 and the facsimile 115 will be described later.

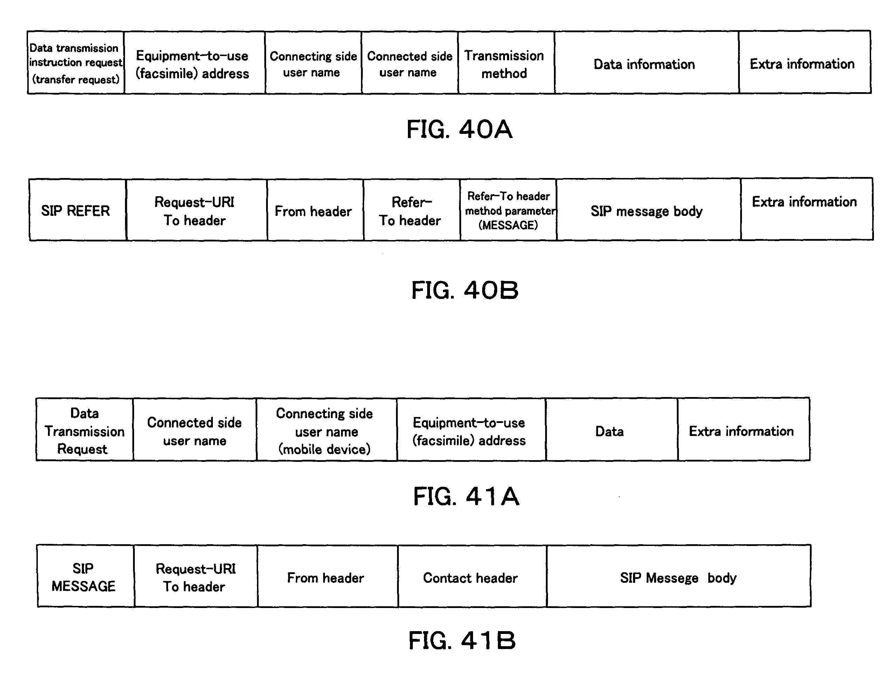

At the outset, in a state where a connection between the mobile device 120 and the external terminal 701 is established, the mobile device 120 sends a data transmission instruction to the facsimile 115. The data transmission instruction to be sent here is a SIP REFER command. Figure 40A shows a data structure of a data transmission instruction, and Figure 40B shows the SIP message format adhered to by a data transmission instruction. As shown in Figures 40A and 40B, a data transmission instruction has a REFER command, which is followed by an address of equipment to be used, i.e. the facsimile 115, as Request-URI/To header, a user name of the connecting side, i.e. the mobile device 120, as a From header, a user name of the connected side, i.e. the external terminal 701, as a Refer-To header, and information about a transmission method as a Refer-To header method parameter, and has data information in a message body. Upon receiving this data transmission instruction, the facsimile 115 sends a data transmission instruction response (200 OK) to the mobile device 120.

The facsimile 115 then conducts a data transmission to the external terminal 701 based on the data transmission instruction sent from the mobile device 120. The data transmission request to be sent here is a SIP MESSAGE command. Figure 41A shows a data structure of a data transmission request, and Figure 41B shows the SIP message format adhered to by a data transmission request. As shown in Figures 41A and 41B, a data transmission request has a MESSAGE command, which is followed by a user name of the connected side, i.e. the external terminal 701, as Request-URI/To header, a user name of the connecting side, i.e. the mobile device 120, as a From header, and an address of equipment to be used, i.e. the facsimile 115, as a Contact header, and has data in a message body. This data is data inputted via the data input/output section 408 of the facsimile 115. Upon receiving this data transmission request, the external terminal 701 sends a data transmission response (200 OK) to the facsimile 115. The facsimile 115, upon receiving a data transmission response from the external terminal 701, then sends a data transmission completion notice to the mobile device 120.

This data transmission completion notice is a SIP NOTIFY command. The mobile device 120 upon receiving this data transmission completion notice sends a completion notice response (200 OK) to the facsimile 115, and the communication using the facsimile 115 is completed. A sequence like this allows the mobile device 120 to have the facsimile 115 send to the external terminal 701 data information which cannot be processed by the mobile device 120.

The process in the mobile device 120 will be described next with reference to Figure 38. First, the mobile device 120 analyzes a request from a user by means of the user request analysis section 203 and analyzes whether the request can be processed by the mobile device 120 or not (S512). In this example, a user requests a facsimile transmission (e.g. reading data on paper and sending it), which cannot be processed by the mobile device 120. Based on an analysis result by the user request analysis section 203, the mobile device 120 selects from the available equipment information recording medium 207 equipment capable of processing the user request, indicates it, and allows the user to choose which piece of the equipment to use. The mobile device 120 then analyzes a user's choice input by means of the user request analysis section 203 and requests of the chosen equipment a data transmission (S514). That is, a data transmission instruction is sent here from the mobile device 120 to the facsimile 115.

After sending a data transmission instruction, the mobile device 120 judges whether the data transmission process is successful or not (S516). When judged that the data transmission is successful, the mobile device 120 indicates on the communication information indication section 204 that the process is successful (S520). When judged that the data transmission is unsuccessful, the mobile device 120 indicates on the communication information indication section 204 that the process is unsuccessful (S518). In either case, the mobile device 120 continues the connection with the external terminal 701 (S522).

The process in the facsimile 115 will be described next with reference to Figure 39. Upon receiving by means of the signaling control section 407 a data transmission instruction sent from the mobile device 120 (S532), the facsimile 115 judges whether the received data transmission instruction can be processed or not by means of the general control section 406 (S534). When judged as a result that it cannot be processed, the facsimile 115 sends to the mobile device 120 a response that the instruction cannot be processed (S546), and changes to its initial state (S548).

When judged as a result of the judgment at the step S534 that the facsimile 115 can conduct the process, the facsimile 115 sends data following the data transmission instruction (S536). Specifically, the facsimile 115 analyzes a user request, obtains by means of the data input/output section 408 data to be transmitted (S538), and converts the obtained data by means of the data processing section 405 into data which can be processed (S540). The facsimile 115 then sends the data to the external terminal 701 by means of the signaling control section 407 (S542).

After sending the data, the facsimile 115 sends to the mobile device 120 a response stating process completion (S544), and changes to its initial state (S546).

In the communication method according to the sixth embodiment of the invention, when the mobile device 120 sends data which it cannot process to another terminal, the mobile device 120 can have the facsimile 115 process the data and send the data from the facsimile 115. In addition, since equipment to be indicated as equipment capable of processing data (another facsimile, scanner, etc.) is equipment recorded on the available equipment information recording medium 207, it has been made sure in advance that chosen equipment is available to the user. So, there is no need to conduct such a check every time equipment is chosen, and therefore connection delays can be reduced.

Although the present invention has been described in detail up to this point with several embodiments in conjunction with a network sever, a mobile device, a network system comprising these things, and communication methods using these items according to the invention, the invention is not limited to the above-described embodiments.

In the above embodiments, communication methods to be used at the time of communicating with the external terminal 701 outside the local IP network 111 is mainly described.

However, the invention can also be applied to communication only within the local IP network 111 not including communication with the external terminal 701.

For example, the invention also includes a communication method in which, when data accumulated in the mobile device 120 is to be printed by the printer 116, available equipment is indicated so that a user is allowed to choose a desired printer and a process request for printing is sent to a chosen printer. That is, available equipment is indicated based on information recorded on the available equipment information recording medium 207, from which a user is allowed to choose. There is thus no need for a sequence to check whether the equipment is available or not, and therefore connection time delays can be reduced.

### Industrial Applicability

As described above, in the invention, since a network management device sends equipment information in response to a registration request, a mobile device can obtain information about available equipment in the first step of registration to a network. Additionally, since equipment information is included in a registration response, a mobile device can obtain equipment information by a simple sequence comprising a registration request and its response. The invention can provide these great advantages and is useful as a network management device for managing a terminal connected to a network, a mobile device to be connected to the network, a network system, a communication method using these items, or the like.

## Claims

1. A network management device for managing a terminal connected to a network, the network management device comprising:
a registration request receiving means for receiving a registration request, sent from a mobile device which has just been connected to said network, requesting registration as a terminal connected to said network;
an obtaining means for obtaining, as equipment information, information about equipment connected to said network; and
a registration response sending means for sending to said mobile device a response to said registration request, said response including equipment information obtained by said obtaining means.

2. The network management device according to claim 1, wherein said obtaining means, based on user attribute information included in a received registration request, obtains equipment information on equipment available to that user.

3. The network management device according to claim 1, further comprising:
an identifier sending means for sending a user identifier included in a received registration request to a user attribute information management device which manages attribute information on that user; and
an attribute information receiving means for receiving attribute information on a user related to said identifier sent from said user attribute information management device;
wherein said obtaining means, based on user attribute information received by said attribute information receiving means, obtains equipment information on equipment available to that user.

4. The network device according to claim 1, wherein a protocol used for receiving from and sending to said mobile device a registration request and a registration response is the same as a protocol for communicating with said equipment.

5. The network device according to claim 4, wherein said network is an IP network and said protocol is SIP.

6. A mobile device comprising:
a registration request sending means for sending to a network management device which manages a terminal connected to a network a registration request requesting registration as a terminal connected to said network;
a registration response receiving means for receiving a response to said registration request, said response sent from said network management device, said response including equipment information on available equipment; and
a storage means for storing equipment information on available equipment included in said registration response.

7. The mobile device according to claim 6, wherein said registration request sending means sends said registration request including user attribute information.

8. The mobile device according to claim 6, wherein said registration request sending means sends said registration request including a user identifier.

9. The mobile device according to any one of claims 6 to 8, further comprising:
a choice means for indicating available equipment based on equipment information stored in said storage means and
allowing a user to choose equipment to be used for a certain process; and
a process request sending means for sending a process request to equipment chosen by said choice means, using that equipment's address information included in equipment information stored in said storage means.

10. The mobile device according to claim 9, wherein said choice means indicates available equipment based on equipment information stored in said storage means and allows a user to choose equipment capable of communicating with another terminal, and wherein said process request sending means sends to equipment chosen by said choice means a negotiation request for communication between that equipment and said other terminal.

11. The mobile device according to claim 9, wherein said choice means indicates available equipment based on equipment information stored in said storage means and allows a user to choose equipment capable of establishing additional communication with another terminal being in communication, and wherein said process request sending means sends a negotiation request for additional communication between equipment chosen by said choice means and said other terminal.

12. The mobile device according to claim 9, wherein said choice means indicates available equipment based on equipment information stored in said storage means and allows a user to choose equipment capable of processing data sent from another terminal, and wherein said process request sending means sends to equipment chosen by said choice means a request for processing said data.

13. The mobile device according to any one of claims 6 to 8, further comprising:
a negotiation request receiving means for receiving a negotiation request sent from another terminal, said negotiation request including communication information about communication;
an equipment selection means for, based on communication information included in a received negotiation request, selecting equipment capable of a process related to that negotiation request with reference to said storage means; and
a process request sending means for requesting of equipment selected by said equipment selection means a process related to said negotiation request using that equipment's address information included in equipment information stored in said storage means.

14. The mobile device according to claim 13, further comprising
a choice means for indicating equipment selected by said equipment selection means and allowing said user to choose equipment to be used for a process related to said negotiation request,
wherein said process request sending means requests of equipment chosen by said choice means a process related to said negotiation request.

15. A communication method carried out by a network management device which manages, as equipment information, information about equipment connected to a network and also manages a terminal which has just been connected to said network and by a mobile device which has just been connected to said network, the communication method comprising:
a registration request sending step of sending a registration request from said mobile device to said network management device requesting registration as a terminal connected to said network;
an obtaining step of obtaining equipment information about equipment connected to said network in response to a registration request received by said network management device;
a registration response sending step of sending from said network management device to said mobile device a response to said registration request, said response including obtained equipment information; and
a storage step of storing in said mobile device equipment information included in a registration response received by said mobile device.

16. The communication method according to claim 15, wherein said obtaining step, based on user attribute information included in said registration request received by said network management device, obtains equipment information on equipment available to that user.

17. The communication method according to claim 15, further comprising:
an identifier sending step of sending a user identifier included in a registration request sent in said registration request sending step to a user attribute information management device which manages attribute information on that user; and
an attribute information receiving step of receiving attribute information on a user related to said identifier sent from said user attribute information management device;
wherein said obtaining step, based on user attribute information received in said attribute information receiving step, obtains equipment information on equipment available to that user.

18. The communication method according to any one of claims 15 to 17, comprising:
a negotiation request receiving step in which said mobile device receives a negotiation request for multimedia communication sent from an external terminal outside said network;
a hold step in which said mobile device, in response to a received negotiation request for multimedia communication, puts a connection with said external terminal on hold;
an equipment selection step in which said mobile device, based on stored equipment information, selects equipment capable of multimedia communication;
a negotiation request transfer step in which said mobile device transfers said negotiation request to equipment selected in said equipment selection step; and
a disconnection step in which said mobile device, in response to establishment of connection between equipment to which said negotiation request was transferred and said external terminal, disconnects said external terminal put on hold in said hold step.

19. The communication method according to claim 18, further comprising
a choice step in which said mobile device indicates equipment selected in said equipment selection step and allows a user to choose equipment to carry out said multimedia communication,
wherein, in said negotiation request transfer step, said mobile device transfers said negotiation request to equipment chosen in said choice step.

20. The communication method according to any one of claims 15 to 17, comprising:
a choice step in which said mobile device indicates available equipment based on stored equipment information and allows a user to choose equipment to be used for multimedia communication; and
a negotiation request sending step in which said mobile device sends to equipment chosen in said choice step a negotiation request for establishing connection with an external terminal outside said network and carrying out multimedia communication with said external terminal.

21. The communication method according to any one of claims 15 to 17, comprising:
a connection step in which said mobile device establishes connection with an external terminal outside said network;
a choice step in which said mobile device, during communication between said mobile device and said external terminal, indicates available equipment on said mobile device based on stored equipment information and allows a user to choose equipment to be used for multimedia communication;
a connection step in which said mobile device sends a negotiation request to equipment chosen in said choice step and establishes connection between said mobile device and said equipment; and
a negotiation request sending step in which said mobile device sends to equipment chosen in said choice step a negotiation request for establishing connection between said external terminal and said equipment.

22. The communication method according to any one of claims 15 to 17, comprising:
a connection step in which said mobile device establishes connection with an external terminal outside said network;
a choice step in which said mobile device, during communication between said mobile device and said external terminal, indicates available equipment on said mobile device based on stored equipment information and allows a user to choose equipment to be used for multimedia communication; and
a sending step in which said mobile device sends a negotiation request for establishing connection between equipment chosen in said choice step, said external terminal, and said mobile device.

23. The communication method according to any one of claims 15 to 17, comprising:
a connection step in which said mobile device establishes connection with an external terminal outside said network;
a choice step in which said mobile device, in response to data received from said external terminal which said mobile device cannot process, indicates available equipment based on stored equipment information and allows a user to choose equipment to be used for processing said data; and
a data sending step in which said mobile device sends said data to equipment chosen in said choice step.
